# EUROPEAN PATENT APPLICATION

(11) **EP 3 770 846 A1**
(43) Date of publication of application: **27.01.2021**
(21) Application number: 19772525.2
(22) Date of filing: 20.03.2019
(51) Int. Cl.: G06Q 50/26

(54) **INFORMATION ACQUISITION SYSTEM, INFORMATION ACQUISITION DEVICE, SERVER, INFORMATION TERMINAL, AND INFORMATION ACQUISITION METHOD**

(30) Priority: 22.03.2018 JP 2018053935
(71) Applicant: NEC Corporation, 108-8001 Tokyo (JP)
(72) Inventor: NORIMATSU, Koui, Tokyo 108-8001 (JP); MIZOGUCHI, Masanori, Tokyo 108-8001 (JP); NAKASHIMA, Katsuya, Tokyo 108-8001 (JP); IWANAMI, Akihiro, Tokyo 108-8001 (JP); ASHIDA, Yusuke, Tokyo 108-8001 (JP)
(74) Representative: Betten & Resch
(86) International application number: PCT/JP2019/011900
(87) International publication number: WO 2019/182069

(57) **Abstract**

Provided is an information acquisition system, an information acquisition method, or the like that can realize smoother acquisition of biometric information. The information acquisition apparatus is arranged in a first section where a first subject stands by and has a first reading unit that reads and acquires identification information from a medium carried by the first subject in the first section, a biometric information acquisition unit that acquires biometric information on the first subject from the first subject, and a first information management unit that transmits, to the server, person information including the identification information and the biometric information associated with each other. The server has a second information management unit that registers, to a database, the person information transmitted from the information acquisition apparatus. The information terminal is arranged in a second section different from the first section and has a second reading unit that reads and acquires identification information from a medium carried by a second subject that has passed through the first section, and an information acquisition unit that acquires, from the server, the biometric information associated with the identification information acquired by the second reading unit.

## Description

### [Technical Field]

The present invention relates to an information acquisition system, an information acquisition apparatus, a server, an information terminal, and an information acquisition method.

### [Background Art]

In an examination before admission to a particular facility or the like, visitors may be required to register fingerprint and face image information that is biometric information (Patent Literatures 1 and 2). Registration of fingerprint and face image information is performed in an examination booth or the like in which an examiner handles and examines a visitor.

### [Citation List]

### [Patent Literature]

PTL 1: International Publication No. WO2012/053242
PTL 2: Japanese Patent Application No. 2015-222459

### [Summary of Invention]

### [Technical Problem]

In front of an examination booth in which an examination is performed, however, there may be a long line of visitors due to congestion or the like, and this may result in a longer waiting time for an examination. Thus, in such an examination, there is a demand for smoother acquisition of biometric information such as a fingerprint image and a face image.

The present invention intends to provide an information acquisition system, an information acquisition apparatus, a server, an information terminal, and an information acquisition method that can realize smoother acquisition of biometric information.

### [Solution to Problem]

According to one example aspect of the present invention, provided is an information acquisition system including: a server; an information acquisition apparatus capable of communicating with the server; and an information terminal capable of communicating with the server, and the information acquisition apparatus is arranged in a first section where a first subject stands by. The information acquisition apparatus has a first reading unit that reads and acquires identification information from a medium carried by the first subject, a biometric information acquisition unit that acquires biometric information on the first subject from the first subject, and a first information management unit that transmits, to the server, person information including the identification information and the biometric information associated with each other. The server has a second information management unit that registers, to a database, the person information transmitted from the information acquisition apparatus. The information terminal is arranged in a second section that is different from the first section and the information terminal has a second reading unit that reads and acquires identification information from a medium carried by a second subject that has passed through the first section, and an information acquisition unit that acquires, from the server, the biometric information associated with the identification information acquired by the second reading unit.

According to another example aspect of the present invention, provided is an information acquisition apparatus included in an information acquisition system including a server and an information terminal capable of communicating with the server, arranged in a first area in which a first subject is waiting, and capable of communicating with the server. The information acquisition apparatus includes: a first reading unit that reads and acquires identification information from a medium possessed by the first subject; a biometric information acquisition unit that acquires biometric information on the first subject from the first subject; and a first information management unit that transmits person information including the identification information and the biometric information associated with each other to the server capable of communicating with the information terminal that is arranged in a second area different from the first area and reads and acquires identification information from a medium possessed by a second subject who passed through the first area.

According to yet another example aspect of the present invention, provided is a server included in an information acquisition system including an information acquisition apparatus arranged in a first area and an information terminal arranged in a second area that is different from the first area and capable of communicating with the information acquisition apparatus and the information terminal. The server includes: a second information management unit that registers identification information acquired from a medium possessed by a first subject waiting in the first area and person information including biometric information acquired from the first subject, which are transmitted from the information acquisition apparatus, in a database; and a communication unit that receives an inquiry from the information terminal as to whether or not the information acquisition apparatus is used for a second subject based on identification information acquired from a medium possessed by the second subject who passed through the first area and, if the information acquisition apparatus is used, transmits, to the information terminal, the biometric information associated with the identification information acquired from the medium possessed by the second subject.

According to yet another example aspect of the present invention, provided is an information terminal included in an information acquisition system including a server and an information acquisition apparatus arranged in a first area and capable of communicating with the server, arranged in a second area that is different from the first area, and capable of communicating with the server. The information terminal includes: a second reading unit that reads and acquires identification information from a medium possessed by a second subject who passed through the first area; and an information acquisition unit that acquires, from the server, biometric information on a first subject associated with the identification information acquired by the second reading unit and acquired from the first subject waiting in the first area.

According to yet another example aspect of the present invention, provided is an information acquisition method using an information acquisition system including a server, an information acquisition apparatus capable of communicating with the server, and an information terminal capable of communicating with the server. The method includes: at the information acquisition apparatus arranged in a first section where a first subject stands by, reading and acquiring identification information from a medium carried by the first subject; acquiring biometric information on the first subject from the first subject; and transmitting, to the server, person information including the identification information and the biometric information associated with each other; at the server, registering, to a database, the person information transmitted from the information acquisition apparatus; and at the information terminal arranged in a second section that is different from the first section, reading and acquiring identification information from a medium carried by a second subject that has passed through the first section; and acquiring, from the server, the biometric information associated with the acquired identification information.

### [Advantageous Effects of Invention]

According to the present invention, smoother acquisition of biometric information can be realized.

### [Brief Description of Drawings]

[Fig. 1]

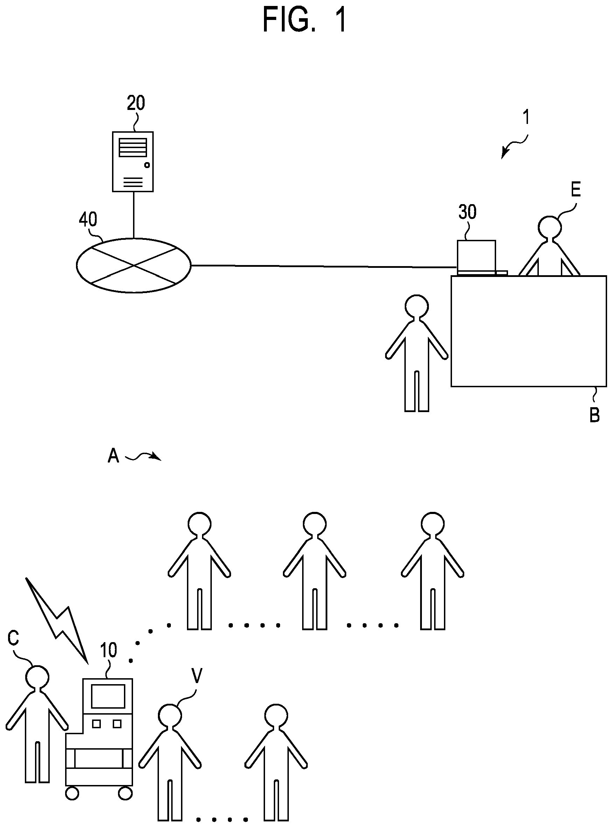

   Fig. 1 is a schematic diagram illustrating the entire configuration of an information acquisition system according to a first example embodiment of the present invention.
[Fig. 2]

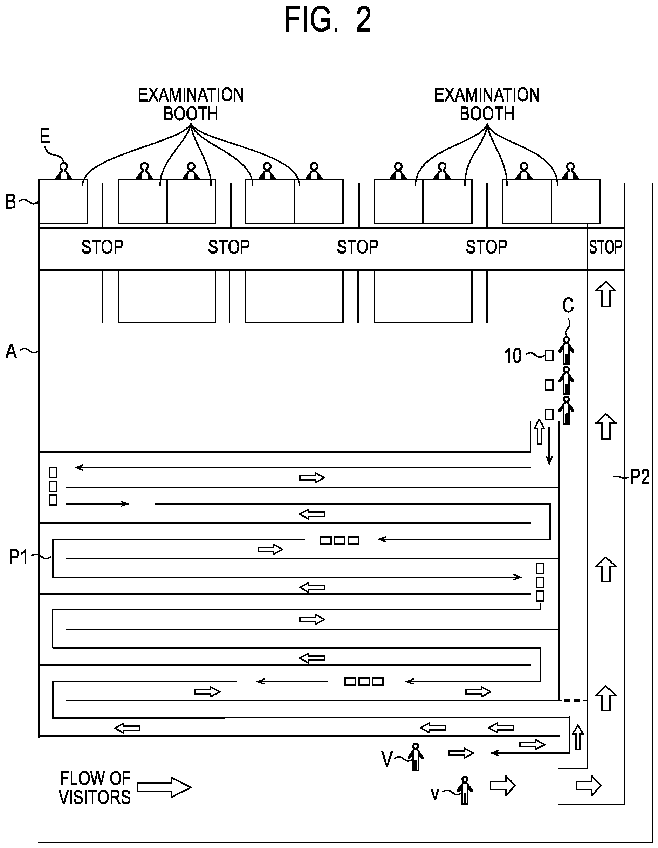

   Fig. 2 is a schematic diagram illustrating one example of an examination site to which the information acquisition system according to the first example embodiment of the present invention is introduced.
[Fig. 3]

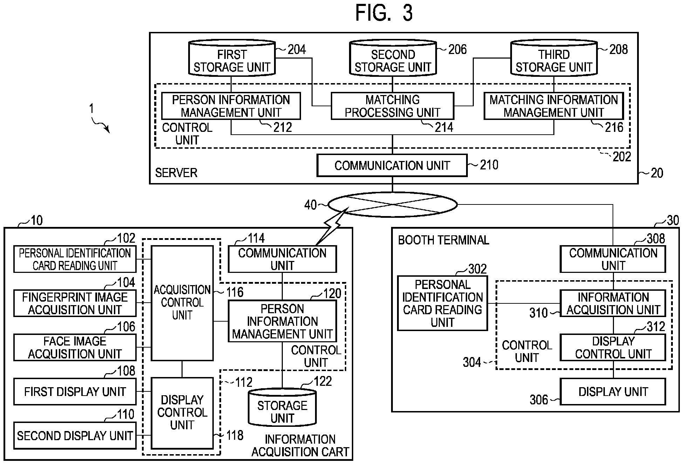

   Fig. 3 is a block diagram illustrating a function configuration of the information acquisition system according to the first example embodiment of the present invention.
[Fig. 4]

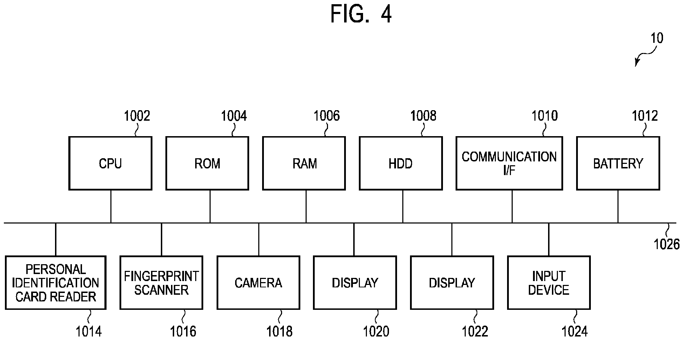

   Fig. 4 is a block diagram illustrating one example of a hardware configuration of an information acquisition cart according to the first example embodiment of the present invention.
[Fig. 5]

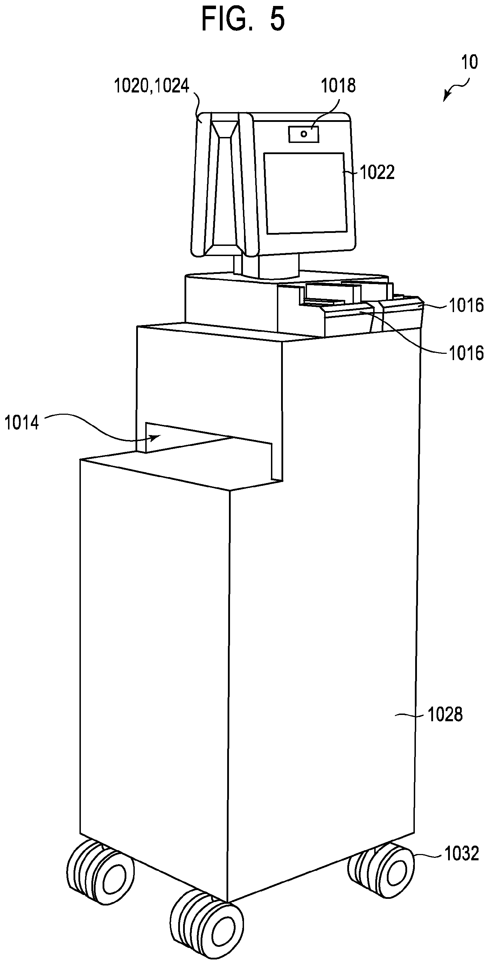

   Fig. 5 is a schematic diagram illustrating one example of an external appearance of the information acquisition cart according to the first example embodiment of the present invention.
[Fig. 6]

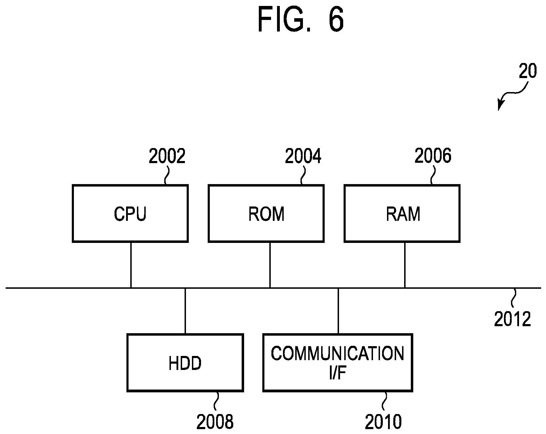

   Fig. 6 is a block diagram illustrating one example of a hardware configuration of a server according to the first example embodiment of the present invention.
[Fig. 7]

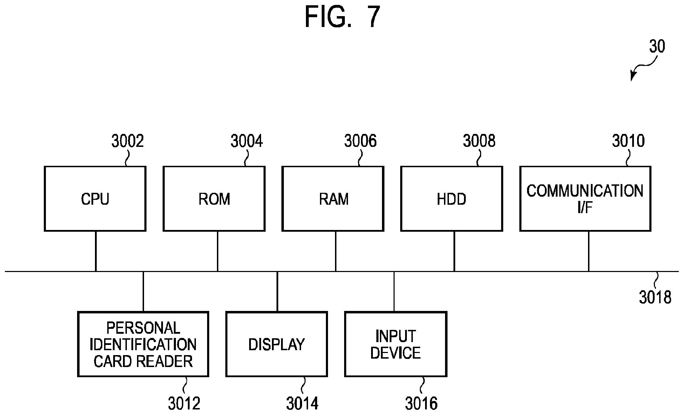

   Fig. 7 is a block diagram illustrating one example of a hardware configuration of a booth terminal according to the first example embodiment of the present invention.
[Fig. 8]

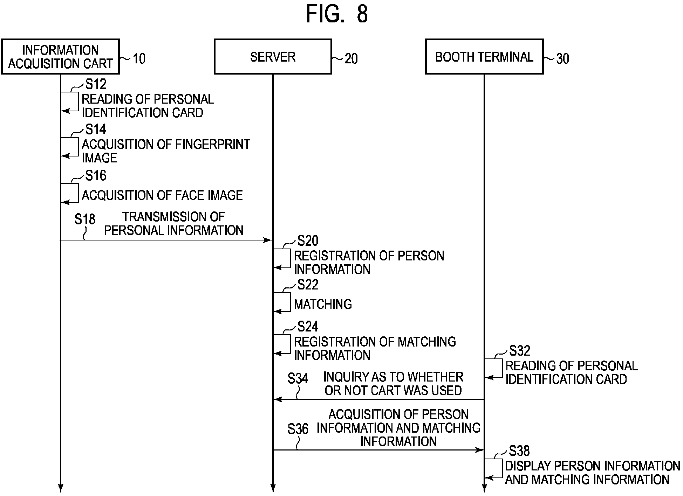

   Fig. 8 is a sequence diagram illustrating an information acquisition method according to the first example embodiment of the present invention.
[Fig. 9]

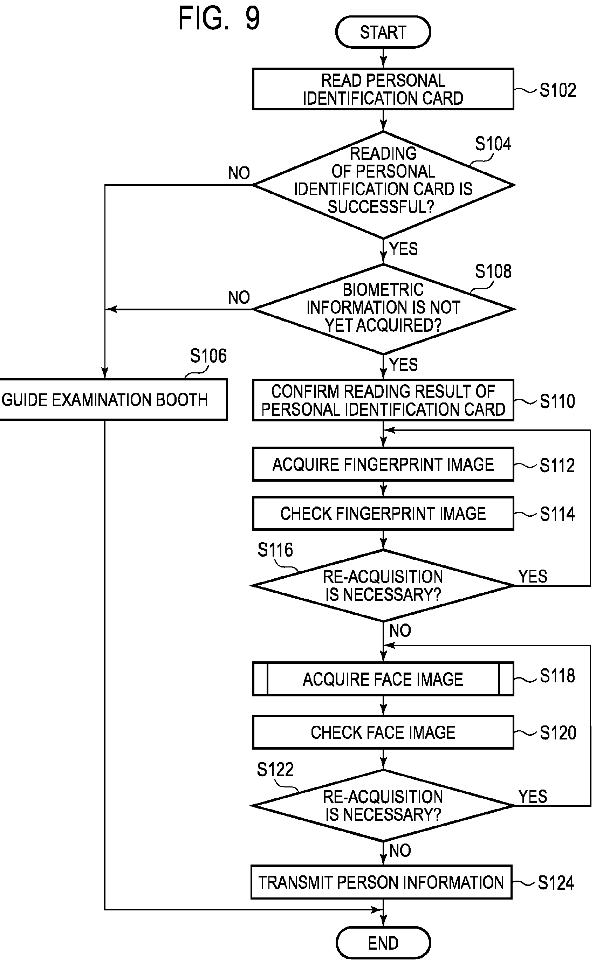

   Fig. 9 is a flowchart illustrating a process in the information acquisition cart in the information acquisition method according to the first example embodiment of the present invention.
[Fig. 10]

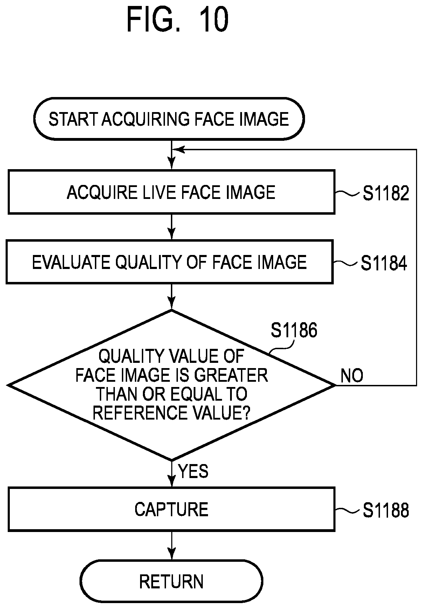

   Fig. 10 is a flowchart illustrating acquisition of a face image of the process in the information acquisition cart in the information acquisition method according to the first example embodiment of the present invention.
[Fig. 11]

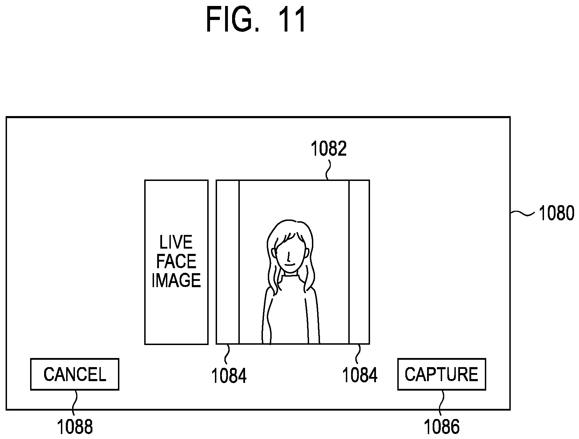

   Fig. 11 is a schematic diagram illustrating an example of an acquisition window for a face image of the information acquisition cart according to the first example embodiment of the present invention.
[Fig. 12]

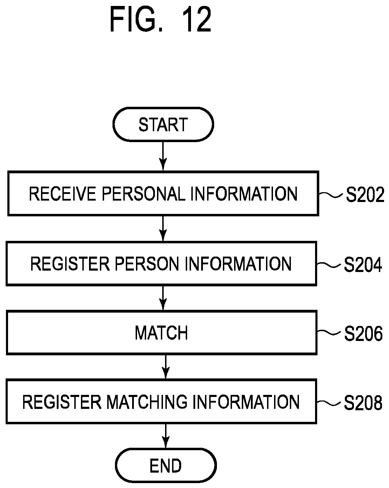

   Fig. 12 is a flowchart illustrating matching information registration of a process in a server in the information acquisition method according to the first example embodiment of the present invention.
[Fig. 13]

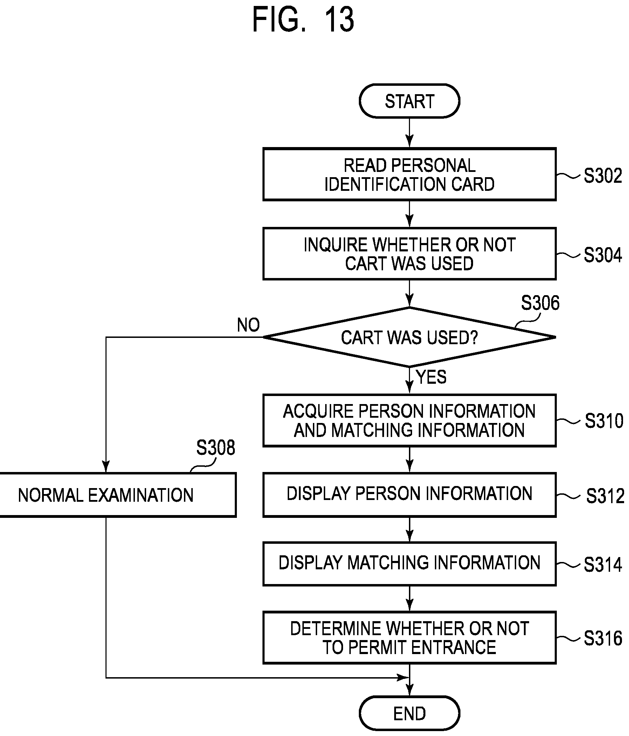

   Fig. 13 is a flowchart illustrating a process in a booth terminal in the information acquisition method according to the first example embodiment of the present invention.
[Fig. 14]

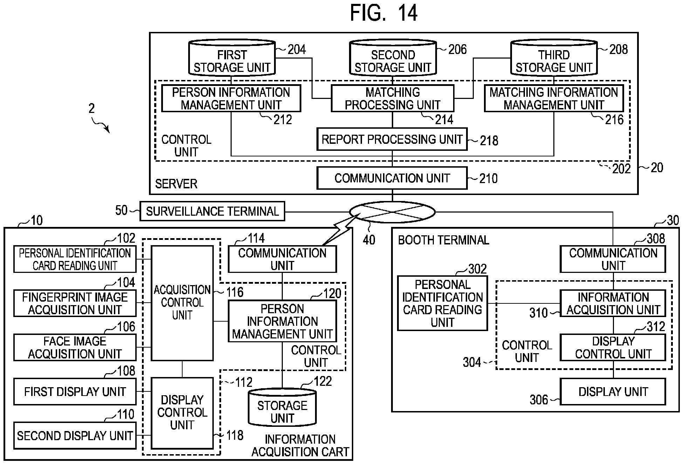

   Fig. 14 is a block diagram illustrating a function configuration of an information acquisition system according to a second example embodiment of the present invention.
[Fig. 15]

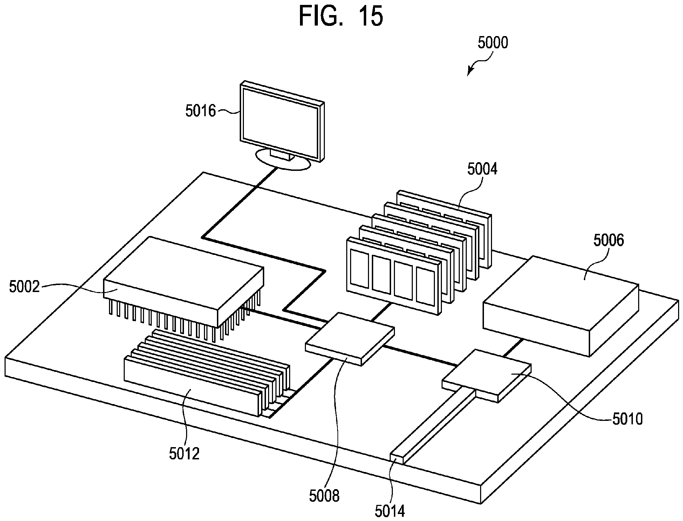

   Fig. 15 is a schematic diagram illustrating an example of a computer apparatus according to a third example embodiment of the present invention.
[Fig. 16]

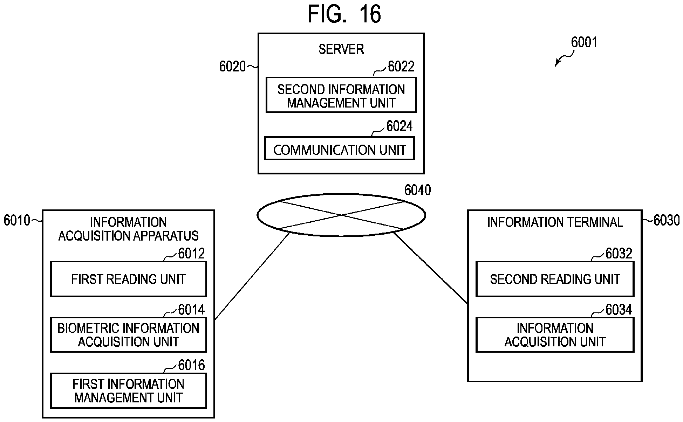

   Fig. 16 is a block diagram illustrating a function configuration of an information acquisition system according to other example embodiments of the present invention.

### [Description of Embodiments]

### [First Example Embodiment]

An information acquisition system and an information acquisition method according to a first example embodiment of the present invention will be described by using Fig. 1 to Fig. 13.

First, the information acquisition system according to the present example embodiment will be described by using Fig. 1 to Fig. 3. Fig. 1 is a schematic diagram illustrating the entire configuration of the information acquisition system according to the present example embodiment. Fig. 2 is a schematic diagram illustrating one example of an examination site to which the information acquisition system according to the present example embodiment is introduced. Fig. 3 is a block diagram illustrating a function configuration of the information acquisition system according to the present example embodiment.

The information acquisition system according to the present example embodiment is to acquire biometric information as personal identification information on a visitor to be examined and utilize the acquired biometric information in an examination site at an airport or a seaport. In the present example embodiment, a case where a fingerprint image and a face image are acquired and utilized as biometric information will be described as a specific example as appropriate. Biometrics may include a body or something generated from a body that can identify an individual, such as a fingerprint, a face, a vein, a voiceprint, an electroencephalography, and the like, for example. Further, biometric information may be information related to biometrics described above and includes digital information and analog information.

As illustrated in Fig. 1, an information acquisition system 1 according to the present example embodiment includes an information acquisition cart 10 arranged movably in an examination site A, a server 20 installed within a facility of a control station, and a booth terminal 30 arranged in an examination booth B of the examination site A. Note that, in the examination site A, a plurality of information acquisition carts 10 are arranged, and each booth terminal 30 is arranged in each of a plurality of examination booths B. The examination booths B are provided in a section that is different from a section where the information acquisition carts 10 are arranged. Each information acquisition cart 10 is operated by a guide C. Further, in each examination booth B, a visitor V who is a requester requesting permission for admission is examined by an examiner E.

The information acquisition carts 10, the server 20, and the booth terminals 30 are network-connected to a network 40, respectively. The information acquisition carts 10 and the server 20 can communicate with each other via the network 40. Further, the booth terminals 30 and the server 20 can communicate with each other via the network 40. The network 40 may be a Local Area Network (LAN) or a Wide Area Network (WAN), for example, while the type thereof is not particularly limited.

For example, in the examination site A, as illustrated in Fig. 2, visitors including the visitor V and a visitor v are guided to the examination booths B along different paths in accordance with a difference in their nationality or other attributes or the like. The visitor V is guided to one examination booth B of the plurality of the examination booths B which is for visitors having a particular attribute or the like along a path P1 and then examined. The visitor v is guided to another examination booth B of the plurality of the examination booth B which is for visitors having another attribute or the like along a path P2 and then examined.

The information acquisition cart 10 has transportability and arranged movably in a section including the path P1 through which the visitor V who is a subject to be examined passes. Motion and operation of the information acquisition cart 10 is controlled by the guide C who is an operator thereof. The information acquisition cart 10 is moved on the path P1 in a direction opposite to the heading direction of the visitors V standing in line to wait for an examination in the path P1 and then stopped at each position of the visitors V standing in line. At each stop position, the information acquisition cart 10 is operated for acquisition of a personal identification number and biometric information such as a fingerprint image, a face image, or the like. The personal identification number and biometric information such as a fingerprint image, a face image, or the like acquired by the information acquisition cart 10 are transmitted and registered to the server 20, as described later. The biometric information transmitted and registered to the server 20 is utilized in an examination by the examiner E in the examination booth B.

Next, respective components of the information acquisition system 1 in the present example embodiment will be described in detail.

The information acquisition cart 10 is an information acquisition apparatus that acquires, from the visitor V waiting for an examination, the personal identification number thereof and biometric information such as the fingerprint image and the face image thereof in a section including the path P1 through which the visitor V moving to the examination booth B passes. As illustrated in Fig. 3, the information acquisition cart 10 has a personal identification card reading unit 102, a fingerprint image acquisition unit 104, a face image acquisition unit 106, a first display unit 108, a second display unit 110, a control unit 112, and a communication unit 114.

The personal identification card reading unit 102 is a reading unit that is formed of an Optical Character Reader (OCR) device or a noncontact integrated circuit (IC) reader, for example, and reads a personal identification card presented by the visitor V waiting for an examination and acquires the personal identification number. A personal identification card is a medium in which identification information including a personal identification number is written or recorded.

The personal identification card reading unit 102 reads a reading portion on a ticket face of a personal identification card by using a machine such as an OCR to acquire a personal identification number in a case of a machine reading personal identification card. Further, the personal identification card reading unit 102 acquires a personal identification number recorded in the IC chip in a case of an IC personal identification card on which a noncontact IC chip is mounted.

In the case of an IC personal identification card, biometric information such as a fingerprint image, a face image, an iris image, a finger vein image, a palm print image, a palm vein image, or the like of an applicant at the time of application of personal identification card is stored and preregistered in the IC chip. The number of pieces of preregistered biometric information that is biometric information preregistered in the IC chip may be one or plural. Further, multiple pieces of preregistered biometric information may be any combined pieces of biometric information. When the preregistered biometric information is stored in an IC chip, the personal identification card reading unit 102 further acquires preregistered biometric information such as a face image captured at the time of application of personal identification card stored in the IC chip.

The fingerprint image acquisition unit 104 is a biometric information acquisition unit that is formed of a fingerprint scanner of an electrostatic capacity type, an optical type, or the like, for example, and acquires one or more fingerprint images of the visitor V. The fingerprint image is one of the biometric images of the visitor V. The fingerprint image acquisition unit 104 is formed of two fingerprint scanners, for example, and reads fingerprints of two index fingers of both hands, for example, which are placed on respective reading faces with balls of these fingers facing the reading faces and thereby acquires respective fingerprint images. Note that, as described later, quality evaluation of fingerprint images is performed in an acquisition control unit 116 so that fingerprint images having quality above a certain level are acquired by the fingerprint image acquisition unit 104.

The face image acquisition unit 106 is a biometric information acquisition unit that is formed of a digital camera, for example, and acquires a face image of the visitor V. A face image is one of the biometric images of the visitor V. Note that, as described later, quality evaluation of a face image is performed in an acquisition control unit 116 so that a face image having quality above a certain level is acquired by the face image acquisition unit 106.

As the biometric information acquisition unit, various biometric information acquisition units other than the fingerprint image acquisition unit 104 and the face image acquisition unit 106 may be used as described below. Cart-acquired biometric information that is biometric information acquired by the biometric information acquisition unit of the information acquisition cart 10 may be used alone or may be used in combination of multiple pieces thereof.

For example, an iris image acquisition unit may be used as the biometric information acquisition unit. The iris image acquisition unit is formed of a digital camera such as an infrared camera, a visible light camera, or the like, for example, and acquires an iris image of the visitor V. The iris image acquisition unit can be configured to acquire an iris image at the same time as or in parallel to acquisition of a face image by the face image acquisition unit 106. Also for the iris image acquisition unit, quality evaluation of an iris image can be performed in the acquisition control unit 116 so that an iris image having quality above a certain level is acquired by the iris image acquisition unit.

Further, for example, a finger vein image acquisition unit may be used as the biometric information acquisition unit. The finger vein image acquisition unit acquires a finger vein image of the visitor V by capturing a finger vein pattern of the visitor V obtained by transmitting a near-infrared ray through a finger, for example. The finger vein image acquisition unit can be configured to acquire a vein image of a finger from which a fingerprint is acquired by the fingerprint image acquisition unit 104 at the same time as or in parallel to acquisition of the fingerprint by the fingerprint image acquisition unit 104. Also for the finger vein image acquisition unit, quality evaluation of a finger vein image can be performed in the acquisition control unit 116 so that a finger vein image having quality above a certain level is acquired by the finger vein image acquisition unit.

Further, for example, a palm print image acquisition unit may be used as the biometric information acquisition unit. The palm print image acquisition unit acquires a palm print image of the visitor V by capturing a palm of the visitor V by using a digital camera or the like, for example. Also for the palm print image acquisition unit, quality evaluation of a palm print image can be performed in the acquisition control unit 116 so that a palm print image having quality above a certain level is acquired by the palm print image acquisition unit.

Further, a palm vein image acquisition unit may be used as the biometric information acquisition unit. The palm vein image acquisition unit acquires a palm vein image of the visitor V by emitting a near-infrared ray or a visible light to a palm and capturing a palm vein pattern of the visitor V, for example. The palm vein image acquisition unit can be configured to acquire a vein image of a palm from which a palm print image is acquired by the palm print image acquisition unit at the same time as or in parallel to acquisition of the palm print image by the palm print image acquisition unit. Also for the palm vein image acquisition unit, quality evaluation of a palm vein image can be performed in the acquisition control unit 116 so that a palm vein image having quality above a certain level is acquired by the palm vein image acquisition unit.

Two or more biometric information acquisition units described above may be used in combination, or any one of the biometric information acquisition units may be used alone. Further, when two or more biometric information acquisition units are used, the order of acquisition of biometric information by respective biometric information acquisition units is not particularly limited and may be any order. Further, two or more biometric information acquisition units may acquire biometric information at the same time or in parallel. The acquisition control unit 116 controls the order of acquisition of biometric information by a plurality of biometric information acquisition units.

The first display unit 108 is formed of a touchscreen display, for example, and displays an operation window for the guide C and accepts entry of an operation instruction from the guide C.

The second display unit 110 is formed of a display, for example, and displays a guide window for the visitor V.

The control unit 112 controls the operation of each unit of the information acquisition cart 10. The control unit 112 has the acquisition control unit 116, a display control unit 118, and a person information management unit 120.

The acquisition control unit 116 controls acquisition of a personal identification number and preregistered biometric information performed by the personal identification card reading unit 102. Further, the acquisition control unit 116 controls acquisition of biometric information performed by the biometric information acquisition unit. Specifically, the acquisition control unit 116 controls acquisition of a fingerprint image performed by the fingerprint image acquisition unit 104. Further, the acquisition control unit 116 controls acquisition of a face image performed by the face image acquisition unit 106. Further, the acquisition control unit 116 controls acquisition of biometric information performed by other biometric information acquisition units described above.

Further, the acquisition control unit 116 transmits a personal identification number and preregistered biometric information acquired by the personal identification card reading unit 102 to the person information management unit 120. Further, the acquisition control unit 116 transmits biometric information acquired by the biometric information acquisition unit to the person information management unit 120. Specifically, the acquisition control unit 116 transmits a fingerprint image acquired by the fingerprint image acquisition unit 104, a face image acquired by the face image acquisition unit 106, and biometric information acquired by another biometric information acquisition unit to the person information management unit 120.

Further, the acquisition control unit 116 functions as a quality evaluation unit that evaluates the quality of biometric information such as a biometric image acquired by the biometric information acquisition unit. Specifically, the acquisition control unit 116 evaluates the quality of a fingerprint image acquired by the fingerprint image acquisition unit 104 and calculates a quality value of the fingerprint image that is an index of the quality thereof. Further, the acquisition control unit 116 evaluates the quality of a face image acquired by the face image acquisition unit 106 and calculates a quality value of a face image that is an index of the quality thereof. Further, also for another biometric information, the acquisition control unit 116 calculates a quality value of biometric information that is an index of the quality thereof.

Further, the acquisition control unit 116 can determine biometric information to be acquired by the biometric information acquisition unit in accordance with a condition into which the visitor V is classified. That is, the acquisition control unit 116 can change biometric information to be acquired by the biometric information acquisition unit in accordance with the condition into which the visitor V is classified. The condition into which the visitor V is classified may be, for example, the number of times the examination site A has been used by the visitor V, which is a facility where biometric information acquired by the biometric information acquisition unit is used. Further, the condition into which the visitor V is classified may be, for example, whether or not the visitor V has complimentary registration via pre-application or paid application or other types of preregistration.

For example, when the number of times the examination site A has been used by the visitor V is larger, the acquisition control unit 116 can reduce the number of pieces of biometric information to be acquired by the biometric information acquisition unit. Further, for example, when the number of times the examination site A has been used by the visitor V is larger, the acquisition control unit 116 may control acquisition of biometric information performed by the biometric information acquisition unit so as to acquire biometric information that is acquired in a simpler way. That is, based on a rank of biometric information defined in descending order of simplicity of acquisition, the acquisition control unit 116 may control acquisition of biometric information performed by the biometric information acquisition unit so as to acquire biometric information having a higher rank when the number of times the examination site A has been used by the visitor V is larger. Further, for example, when the number of times the examination site A has been used by the visitor V is smaller, the acquisition control unit 116 may control acquisition of biometric information performed by the biometric information acquisition unit so as to acquire more accurate biometric information. That is, based on a rank of biometric information defined in descending order of accuracy, the acquisition control unit 116 may control acquisition of biometric information performed by the biometric information acquisition unit so as to acquire biometric information having a higher rank when the number of times the examination site A has been used by the visitor V is smaller.

For example, in the biometric information described above, acquisition of a face image is the simplest, acquisition of a fingerprint image is the second, acquisition of a vein image of a finger or a palm is the third, acquisition of a palm print image is the fourth, and acquisition of an iris image is the fifth simplest. In such a case, the acquisition control unit 116 may control acquisition of biometric information performed by the biometric information acquisition unit so as to acquire biometric information that is acquired in a simpler way in accordance with such order when the number of times the examination site A has been used by the visitor V is larger or when the preregistration such as complimentary registration is present.

Further, for example, in the biometric information described above, an iris image has the highest accuracy, a fingerprint image has the second, a vein image of a finger or a palm has the third, a face image has the fourth, and a palm print image has the fifth highest accuracy. In such a case, the acquisition control unit 116 may control acquisition of biometric information performed by the biometric information acquisition unit so as to acquire more accurate biometric information in accordance with such order when the number of times the examination site A has been used by the visitor V is smaller or when the preregistration such as complimentary registration is absent.

Specifically, the acquisition control unit 116 can change the number of pieces and the type of biometric information based on a first threshold set for each number of times of use and a second threshold that is smaller than the first threshold, for example. In such a case, the acquisition control unit 116 can control acquisition of biometric information so as to acquire only a face image when the number of times of use is greater than or equal to the first threshold and acquire a face image and a fingerprint image when the number of times of use is less than the first threshold and greater than or equal to the second threshold, for example. Further, the acquisition control unit 116 may control acquisition of biometric information so as to acquire a face image, a fingerprint image, and a finger vein image when the number of times of use is less than the second threshold, for example. Note that, the number of thresholds and the value of the threshold for the number of times of use can be suitably set in accordance with various factors such as the scale of the examination site A, the number of visitors V to be processed per unit time, or the like.

Further, for example, when the visitor V is preregistered, the acquisition control unit 116 may reduce the number of pieces of biometric information to be acquired by the biometric information acquisition unit compared to a case of no preregistration. Further, when the visitor V is preregistered, the acquisition control unit 116 may control acquisition of biometric information so as to acquire biometric information that is acquired in a simpler way compared to a case of no preregistration.

Specifically, the acquisition control unit 116 can control acquisition of biometric information so as to acquire only a face image when the visitor V is preregistered and acquire a face image and a fingerprint image when the visitor V is not preregistered, for example.

Note that information related to a condition into which the visitor V is classified, such as the number of times the examination site A has been used, whether or not preregistration is present, or the like is registered in a storage unit such as a first storage unit 204 of the server 20 in association with the personal identification number of the visitor V, for example. In such a case, in response to the personal identification card reading unit 102 acquiring a personal identification number of the visitor V, the acquisition control unit 116 transmits the personal identification number to the server 20 for inquiry. Thereby, the acquisition control unit 116 can acquire, from the server 20, information related to a condition such as the number of times the examination site A has been used, whether or not preregistration is present, or the like corresponding to each personal identification number. The acquisition control unit 116 can use information related to a condition acquired from the server 20 to change biometric information to be acquired by the biometric information acquisition unit as described above.

Further, the information related to a condition into which the visitor V is classified, such as the number of times the examination site A has been used, whether or not preregistration is present, or the like may be registered in a storage unit 122 of the information acquisition cart 10 in association with the personal identification number of the visitor V, for example. In such a case, the acquisition control unit 116 can acquire, from the storage unit 122, information related to a condition such as the number of times the examination site A has been used, whether or not preregistration is present, or the like corresponding to each personal identification number. The acquisition control unit 116 can use information related to a condition acquired from the storage unit 122 to change biometric information to be acquired by the biometric information acquisition unit as described above.

Further, the information related to a condition into which the visitor V is classified, such as the number of times the examination site A has been used, whether or not preregistration is present, or the like may be stored in a personal identification card, for example. In such a case, the personal identification card reading unit 102 can read information related to the number of times the examination site A has been used, whether or not preregistration is present, or the like from a personal identification card of the visitor V. The acquisition control unit 116 can change biometric information to be acquired by the biometric information acquisition unit as described above by using information related to a condition read from the personal identification card reading unit 102.

The display control unit 118 controls display of an operation window for the guide C on the first display unit 108 and display of a guide window for the visitor V on the second display unit 110. The display control unit 118 displays a guide window on the second display unit 110 in accordance with the operation window displayed on the first display unit 108.

The person information management unit 120 is an information management unit that manages a personal identification number transmitted from the acquisition control unit 116, preregistered biometric information, and cart-acquired biometric information such as a fingerprint image, a face image, or the like acquired by the biometric information acquisition unit in association with each other on a visitor V basis. Further, the person information management unit 120 transmits person information including a personal identification number, preregistered biometric information, and cart-acquired biometric information associated with each other via the communication unit 114. The person information further includes date and time information indicating date and time when personal identification number and cart-acquired biometric information such as a fingerprint image, a face image, or the like were acquired.

Note that the information acquisition cart 10 may have a storage unit 122. The person information management unit 120 can temporarily store, in the storage unit 122, the acquired person information that is to be transmitted to the server 20.

The communication unit 114 is connected wirelessly to the network 40 and enables communication between the information acquisition cart 10 and the server 20.

The server 20 has a control unit 202, a first storage unit 204, a second storage unit 206, a third storage unit 208, and a communication unit 210.

The control unit 202 controls the operation of each unit of the server 20. The control unit 202 has a person information management unit 212, a matching processing unit 214, and a matching information management unit 216.

The first storage unit 204 stores a person information database (DB) in which person information acquired by the information acquisition cart 10 is registered.

The second storage unit 206 stores a biometric information blacklist (BL) in which biometric information on a marked person who should need special attention in examination or who should not be permitted for admission is registered. Further, the second storage unit 206 may store a biometric information whitelist (WL) in which biometric information on a person who should be permitted for admission is registered. Note that the second storage unit 206 may store any one of the biometric information BL and the biometric information WL or may store both of the biometric information BL and the biometric information WL. Note that, although a case where the biometric information BL or the biometric information WL is used for matching will be described below as an example, both the biometric information BL and the biometric information WL may be used for matching.

The third storage unit 208 stores a matching information DB in which matching information is registered. The matching information indicates a matching result of cart-acquired biometric information, which is included in person information acquired by the information acquisition cart 10, with the biometric information BL or the biometric information WL and a matching result of cart-acquired biometric information with preregistered biometric information, as described later.

The person information management unit 212 is an information management unit that manages person information transmitted from the information acquisition cart 10. The person information management unit 212 registers, to the person information DB of the first storage unit 204, the person information transmitted from the information acquisition cart 10. The person information registered to the person information DB includes a personal identification number, preregistered biometric information, cart-acquired biometric information, and date and time information that are associated with each other. Further, the person information management unit 212 references the person information DB and responds to an inquiry from the booth terminal 30 as to whether or not the information acquisition cart 10 was used.

The matching processing unit 214 matches cart-acquired biometric information included in person information registered in the person information DB of the first storage unit 204 with the same type of biometric information registered in the biometric information BL or the biometric information WL of the second storage unit 206. Specifically, the matching processing unit 214 matches a fingerprint image acquired by the fingerprint image acquisition unit 104 included in the person information registered in the person information DB with a fingerprint image registered in the biometric information BL or the biometric information WL. Further, the matching processing unit 214 matches a face image acquired by the face image acquisition unit 106 included in the person information registered in the person information DB with a face image registered in the biometric information BL or the biometric information WL. Further, the matching processing unit 214 may match biometric information such as an iris image, a finger vein image, a palm print image, a palm vein image, or the like acquired by various biometric information acquisition units included in person information registered in the person information DB with the same type of biometric information registered in the biometric information BL or the biometric information WL.

Furthermore, the matching processing unit 214 matches cart-acquired biometric information included in person information registered in the person information DB of the first storage unit 204 with the same type of preregistered biometric information acquired from an IC personal identification card. Specifically, the matching processing unit 214 matches a fingerprint image acquired by the fingerprint image acquisition unit 104 included in person information registered in the person information DB with a fingerprint image acquired from an IC personal identification card. Further, the matching processing unit 214 matches a face image acquired by the face image acquisition unit 106 included in person information registered in the person information DB with a face image acquired from an IC personal identification card. Further, the matching processing unit 214 may match biometric information such as an iris image, a finger vein image, a palm print image, a palm vein image, or the like acquired by various biometric information acquisition units included in person information registered in the person information DB with the same type of biometric information acquired from an IC personal identification card. In such a way, the matching processing unit 214 can match cart-acquired biometric information with preregistered biometric information to confirm identity between the visitor V and an applicant of an IC personal identification card and perform identity verification of the visitor V.

Note that, also when cart-acquired biometric information is matched with preregistered biometric information, the type and the number of pieces of biometric information to be matched are not particularly limited and can be changed suitably in accordance with a condition into which the visitor V is classified or the like, for example.

The matching processing unit 214 registers matching information indicating a matching result in the matching information DB of the third storage unit 208. The matching result includes a matching result of cart-acquired biometric information with biometric information registered in the biometric information BL or the biometric information WL and a matching result of cart-acquired biometric information with preregistered biometric information.

The matching information management unit 216 manages the matching information registered in the matching information DB of the third storage unit 208 in association with a personal identification number. The matching information management unit 216 transmits the matching information registered in the matching information DB to the booth terminal 30 via the communication unit 210 in accordance with a request from the booth terminal 30 described later.

The communication unit 210 is connected to the network 40 in a wired or wireless manner and enables communication between the information acquisition cart 10 and the booth terminal 30.

The booth terminal 30 is an information terminal that is arranged in the examination booth B provided in a section that is different from the section where the information acquisition cart 10 is arranged and used by the examiner E. The booth terminal 30 has a personal identification card reading unit 302, a control unit 304, and a display unit 306, and a communication unit 308.

The personal identification card reading unit 302 is a reading unit that is formed of an OCR device or a noncontact IC reader, for example, and reads a personal identification number from the personal identification card presented by the visitor V entering the examination booth B and acquires the personal identification number. The visitor V entering the examination booth B is a person who has passed a section including the path P1 where the information acquisition cart 10 is arranged, and is a requester requesting permission for admission through an examination.

The personal identification card reading unit 302 reads a reading portion on the personal identification card by using a machine such as an OCR and acquires a personal identification number in a case of a machine reading personal identification card. Further, the personal identification card reading unit 302 acquires a personal identification number recorded in the IC chip in a case of an IC personal identification card on which a noncontact IC chip is mounted.

The control unit 304 controls the operation of each unit of the booth terminal 30. The control unit 304 has an information acquisition unit 310 and a display control unit 312.

In accordance with personal identification number acquired by the personal identification card reading unit 302, the information acquisition unit 310 inquires the server 20 via the communication unit 308 as to whether or not the information acquisition cart 10 was used with respect to the visitor V of the personal identification number. The person information management unit 212 of the server 20 that has received the inquiry references the person information DB of the server 20 and responds to the information acquisition unit 310 as to whether or not the information acquisition cart 10 was used. At this time, the person information management unit 212 references the person information DB and checks whether or not the person information including the personal identification number acquired within a predetermined time from the acquisition of the personal identification number performed by the personal identification card reading unit 302 is registered in the person information DB. When it is registered, the person information management unit 212 responds to the information acquisition unit 310 that the information acquisition cart 10 was used. When the information acquisition cart 10 was used, the information acquisition unit 310 acquires the latest person information and the matching information thereof including the personal identification number from the server 20 via the communication unit 308 in accordance with the personal identification number acquired by the personal identification card reading unit 302. The person information acquired by the information acquisition unit 310 includes the latest biometric information associated with the personal identification number acquired by the personal identification card reading unit 302. Further, the matching information acquired by the information acquisition unit 310 is associated with the personal identification number acquired by the personal identification card reading unit 302.

The display control unit 312 displays the person information and the matching information acquired by the information acquisition unit 310 on the display unit 306.

The display unit 306 is formed of a display, for example, and displays various information such as person information, matching information, or the like for the examiner E of the examination booth B. One or more fingerprint images and a face image are included in the displayed person information.

The communication unit 308 is connected to the network 40 in a wired or wireless manner and enables communication with the server 20.

As described above, the information acquisition system 1 including the information acquisition carts 10, the server 20, and the booth terminals 30 is configured.

The information acquisition cart 10 described above is formed of a computer apparatus, for example. One example of the hardware configuration of the information acquisition cart 10 will be described by using Fig. 4 and Fig. 5. Fig. 4 is a block diagram illustrating one example of a hardware configuration of the information acquisition cart 10 according to the present example embodiment. Fig. 5 is a schematic diagram illustrating one example of the external appearance of the information acquisition cart 10 according to the present example embodiment.

As illustrated in Fig. 4, the information acquisition cart 10 has a central processing unit (CPU) 1002, a read-only memory (ROM) 1004, a random access memory (RAM) 1006, and a hard disk drive (HDD) 1008. Further, the information acquisition cart 10 has a communication interface (I/F) 1010 and a battery 1012. Further, the information acquisition cart 10 has a personal identification card reader 1014, a fingerprint scanner 1016, and a camera 1018. Furthermore, the information acquisition cart 10 has a display 1020, a display 1022, and an input device 1024. The CPU 1002, the ROM 1004, the RAM 1006, the HDD 1008, the communication I/F 1010, and the battery 1012 are connected to a bus line 1026. The personal identification card reader 1014, the fingerprint scanner 1016, the camera 1018, the display 1020, the display 1022, and the input device 1024 are also connected to the bus line 1026.

The CPU 1002 controls the entire operation of the information acquisition cart 10. Further, the CPU 1002 executes a program implementing the function of each unit of the acquisition control unit 116, the display control unit 118, and the person information management unit 120 in the control unit 112. The CPU 1002 loads a program stored in the HDD 1008 or the like into the RAM 1006 and executes it to implement the function of each unit in the control unit 112.

The ROM 1004 stores programs such as a boot program. The RAM 1006 is used as a working area when the CPU 1002 executes a program. Further, the HDD 1008 stores programs executed by the CPU 1002.

Further, the HDD 1008 is a storage device that implements the function of the storage unit 122. Note that the storage device that implements the function of the storage unit 122 is not limited to the HDD 1008. Various storage devices may be used to implement the function of the storage unit 122.

The communication I/F 1010 is connected wirelessly to the network 40. The communication I/F 1010 controls wireless data communication with the server 20 connected to the network 40.

The battery 1012 supplies power to each unit of the information acquisition cart 10. In such a way, the information acquisition cart 10 is driven by the battery 1012. The information acquisition cart 10 has transportability because of having a wireless communication function and being driven by a battery.

The personal identification card reader 1014 functions as the personal identification card reading unit 102 and reads a personal identification card to acquire a personal identification number. The personal identification card reader 1014 has an OCR unit that reads a reading portion on a ticket face of the personal identification card and acquires a personal identification number in a case of a machine reading personal identification card. Further, the personal identification card reader 1014 has a noncontact IC reader unit that contactlessly acquires a personal identification number and preregistered biometric information recorded in the IC chip in a case of an IC personal identification card.

The fingerprint scanner 1016 functions as the fingerprint image acquisition unit 104 and reads one or more fingerprints of the visitor V to acquire one or more fingerprint images. The scheme of reading a fingerprint is of an electrostatic capacitor type, an optical type, or the like, for example.

The camera 1018 functions as the face image acquisition unit 106 and captures a face of the visitor V to acquire a face image.

The information acquisition cart 10 may have a hardware configuration including a device such as a near-infrared camera, a visible light camera, or the like that function as various biometric information acquisition units in addition to the fingerprint scanner 1016 and the camera 1018.

The display 1020 functions as the first display unit 108 that displays an operation window for the guide C. Further, the display 1022 functions as the second display unit 110 that displays a guide window for the visitor V. The display 1020 is of a touchscreen type, for example, and has a function as an input device to which instruction entry is input by the guide C.

The input device 1024 is a touchscreen embedded in the display 1020 as described above, for example. Further, the input device 1024 may be a keyboard, a mouse, or the like. The guide C is able to set the information acquisition cart 10 or input an instruction of execution of a process via the input device 1024.

Fig. 5 illustrates one example of the external appearance of the information acquisition cart 10 described above.

As illustrated in Fig. 5, the information acquisition cart 10 has a housing 1028. For example, four caster wheels 1032 are provided to the bottom of the housing 1028. This enables the guide C to move the information acquisition cart 10 by pushing and pulling the information acquisition cart 10. Further, the battery 1012 is accommodated inside the housing 1028.

The display 1020 is provided on the top of the housing 1028. Further, the display 1022 is provided back to back with the display 1020 on the top of the housing 1028.

The personal identification card reader 1014 is provided to the side of the displays 1020 and 1022 on the housing 1028. Further, the fingerprint scanner 1016 is provided in front of the display 1022 on the housing 1028. Further, the camera 1018 is provided to the upper part of the display 1022.

Note that the hardware configuration of the information acquisition cart 10 is not limited to the configuration described above but may be various configuration.

Further, the server 20 described above is formed of a computer apparatus, for example. One example of the hardware configuration of the server 20 will be described by using Fig. 6. Fig. 6 is a block diagram illustrating one example of the hardware configuration of the server 20 according to the present example embodiment. Note that the server 20 may be formed of a single device or may be formed of two or more physically separated devices connected in a wired or wireless manner.

As illustrated in Fig. 6, the server 20 has a CPU 2002, a ROM 2004, a RAM 2006, an HDD 2008, and a communication I/F 2010. The CPU 2002, the ROM 2004, the RAM 2006, the HDD 2008, and the communication I/F 2010 are connected to a bus line 2012.

The CPU 2002 controls the entire operation of the server 20. Further, the CPU 2002 executes programs implementing the function of the person information management unit 212, the matching processing unit 214, and the matching information management unit 216 in the control unit 202. The CPU 2002 loads the program stored in the HDD 2008 or the like into the RAM 2006 and executes it to implement the function of the control unit 202.

The ROM 2004 stores programs such as a boot program. The RAM 2006 is used as a working area when the CPU 2002 executes a program. Further, the HDD 2008 stores programs executed by the CPU 2002.

Further, the HDD 2008 is a storage device that implements the function of the first storage unit 204, the second storage unit 206, and the third storage unit 208. Note that the storage device that implements the function of the first to third storage units 204, 206, and 208 is not limited to the HDD 2008. Various storage devices may be used to implement the function of the first to third storage units 204, 206, and 208. The storage device implementing the function of the first to third storage units 204, 206, and 208 may be a single storage device or may be a plurality of storage devices.

The communication I/F 2010 is connected to the network 40. The communication I/F 2010 controls data communication with the information acquisition cart 10 and the booth terminal 30 that are connected to the network 40.

Note that the hardware configuration of the server 20 is not limited to the configuration described above but may be various configurations.

Further, the booth terminal 30 described above is formed of a computer apparatus, for example. One example of the hardware configuration of the booth terminal 30 will be described by using Fig. 7. Fig. 7 is a block diagram illustrating one example of the hardware configuration of the booth terminal 30 according to the present example embodiment.

As illustrated in Fig. 6, the booth terminal 30 has a CPU 3002, a ROM 3004, a RAM 3006, an HDD 3008, and a communication I/F 3010. Further, the booth terminal 30 has a personal identification card reader 3012, a display 3014, and an input device 3016. The CPU 3002, the ROM 3004, the RAM 3006, the HDD 3008, the communication I/F 3010, the personal identification card reader 3012, the display 3014, and the input device 3016 are connected to a bus line 3018.

The CPU 3002 controls the entire operation of the booth terminal 30. Further, the CPU 3002 executes programs implementing the function of the information acquisition unit 310 and the display control unit 312 in the control unit 304. The CPU 3002 loads the program stored in the HDD 3008 or the like into the RAM 3006 and executes it to implement the function of the control unit 304.

The ROM 3004 stores programs such as a boot program. The RAM 3006 is used as a working area when the CPU 3002 executes a program. Further, the HDD 3008 stores programs executed by the CPU 3002.

The communication I/F 3010 is connected to the network 40. The communication I/F 3010 controls data communication with the server 20 connected to the network 40.

The personal identification card reader 3012 functions as the personal identification card reading unit 302 and reads a personal identification card to acquire a personal identification number. The personal identification card reader 3012 has an OCR unit that reads a reading portion on a ticket face of the personal identification card to acquire a personal identification number in a case of a machine reading personal identification card. Further, the personal identification card reader 3012 has a noncontact IC reader unit that contactlessly acquires a personal identification number recorded in the IC chip in a case of an IC personal identification card.

The display 3014 functions as the display unit 306 that displays person information, matching information, or other information for the examiner E.

The input device 3016 is a keyboard, a mouse, or the like, for example. Further, the input device 3016 may be a touchscreen embedded in the display 3014. The examiner E is able to set the booth terminal 30 or input an instruction of execution of a process via the input device 3016.

Note that the hardware configuration of the booth terminal 30 is not limited to the configuration described above but may be various configurations.

The information acquisition system 1 according to the present example embodiment acquires biometric information such as one or more fingerprint images, a face image, or the like by using the information acquisition cart 10 from the visitor V who is waiting for an examination by the examiner E in the examination booth B. The biometric information acquired by the information acquisition cart 10 is utilized for an examination by the examiner E in the examination booth B.

Therefore, according to the present example embodiment, at the time when the visitor V waiting for an examination enters the examination booth B, the biometric information on the visitor V of interest has already been acquired. Thus, since the examiner E is not required to acquire the biometric information on the visitor V in the examination booth B, it is possible to reduce a waiting time for an examination. As discussed above, according to the present example embodiment, smoother acquisition of biometric information in an examination can be realized.

Next, an information acquisition method according to the present example embodiment using the information acquisition system 1 according to the example embodiment described above will be further described by using Fig. 8 to Fig. 13.

First, the entire flow of the information acquisition method according to the present example embodiment will be described by using Fig. 8. Fig. 8 is a sequence diagram illustrating the information acquisition method according to the present example embodiment.

In a section including the path P1 toward the examination booth B in the examination site A, the information acquisition cart 10 is moved by the guide C, which is an operator, and stopped at a position of the visitor V standing in line to wait for an examination. At the position of the visitor V at which the information acquisition cart 10 is stopped, the information acquisition cart 10 is used by the guide C to acquire person information on the visitor V of interest.

First, the personal identification card reading unit 102 reads a personal identification card presented by the visitor V to acquire the personal identification number (step S12). At this time, when the personal identification card is an IC personal identification card and preregistered biometric information is registered in the IC chip thereof, the personal identification card reading unit 102 reads the personal identification card and acquires the preregistered biometric information.

Next, the biometric information acquisition unit of the information acquisition cart 10 acquires biometric information on the visitor V. Specifically, the fingerprint image acquisition unit 104 acquires a fingerprint image of the visitor V (step S14). Subsequently, the face image acquisition unit 106 acquires a face image of the visitor V (step S16).

Note that the order of acquisition of biometric information on the information acquisition cart 10 is not limited to the order of a fingerprint image and then a face image as described above, and biometric information may be acquired in any order. The type of biometric information acquired by the information acquisition cart 10 is also not limited to the fingerprint image and the face image described above.

For example, in contrast to the case described above, a face image of the visitor V may be acquired by the face image acquisition unit 106, and subsequently, a fingerprint image of the visitor V may be acquired by the fingerprint image acquisition unit 104. Further, a face image of the visitor V may be acquired by the face image acquisition unit 106 at the same time as or in parallel to acquisition of a fingerprint image of the visitor V by the fingerprint image acquisition unit 104.

Further, for example, when a face image and an iris image are acquired as biometric information, a face image of the visitor V may be acquired by the face image acquisition unit 106, and subsequently, an iris image of the visitor V may be acquired by the iris image acquisition unit. Alternatively, an iris image of the visitor V may be acquired by the iris image acquisition unit, and subsequently, a face image of the visitor V may be acquired by the face image acquisition unit 106. Furthermore, an iris image of the visitor V may be acquired by the iris image acquisition unit at the same time as or in parallel to acquisition of a face image of the visitor V by the face image acquisition unit 106.

Further, when a fingerprint image and a finger vein image are acquired as biometric information, a fingerprint image of the visitor V may be acquired by the fingerprint image acquisition unit 104, and subsequently, a finger vein image of the visitor V may be acquired by the finger vein image acquisition unit. Alternatively, a finger vein image of the visitor V may be acquired by the finger vein image acquisition unit, and subsequently, a fingerprint image of the visitor V may be acquired by the fingerprint image acquisition unit 104. Furthermore, at the same time as or in parallel to acquisition of a fingerprint image of the visitor V by the fingerprint image acquisition unit 104, a finger vein image of the same finger of the visitor V may be acquired by the finger vein image acquisition unit.

Further, when a palm print image and a palm vein image are acquired as biometric information, a palm print image of the visitor V may be acquired by the palm print image acquisition unit, and subsequently, a palm vein image of the visitor V may be acquired by the palm vein image acquisition unit. Alternatively, a palm vein image of the visitor V may be acquired by the palm vein image acquisition unit, and subsequently, a palm print image of the visitor V may be acquired by the palm print image acquisition unit. Furthermore, at the same time as or in parallel to acquisition of a palm print image of the visitor V by the palm print image acquisition unit, a palm vein image of the same palm of the visitor V may be acquired by the palm vein image acquisition unit.

Next, the person information management unit 120 transmits person information including the acquired personal identification number, the preregistered biometric information, and the cart-acquired biometric information to the server 20 (step S18).

In the information acquisition cart 10, steps S12 to S18 described above are repeated for each of the visitors V waiting for an examination.

In the server 20, in response to person information being transmitted from the information acquisition cart 10, the person information management unit 212 registers the transmitted person information to the person information DB of the first storage unit 204 (step S20) .

Next, the matching processing unit 214 matches the cart-acquired biometric information included in the person information registered in the person information DB against the same type of biometric information registered in the biometric information BL or the biometric information WL of the second storage unit 206. Further, the matching processing unit 214 matches the cart-acquired biometric information included in the person information registered in the person information DB with the same type of preregistered biometric information (step S22).

Subsequently, the matching processing unit 214 registers the matching information indicating a matching result to the matching information DB of the third storage unit 208 (step S24).

In the server 20, steps S20 to S24 described above are repeated every time person information is transmitted from the information acquisition cart 10.

The visitor V standing in line in the path P1 to wait for an examination passes through a section including the path P1 where the information acquisition cart 10 is arranged and enters the examination booth B. In the booth terminal 30, the personal identification card reading unit 302 reads a personal identification card from the personal identification card presented by the visitor V entering the examination booth B and acquires a personal identification number (step S32).

Next, in accordance with the personal identification number acquired by the personal identification card reading unit 302, the information acquisition unit 310 inquires whether or not the information acquisition cart 10 was used with respect to the visitor V of interest (step S34). Subsequently, if the information acquisition cart 10 was used, the information acquisition unit 310 acquires person information and matching information on the visitor V of interest from the server 20 (step S36). If the information acquisition cart 10 was not used, a normal examination is performed.

Next, the display control unit 312 displays the person information and the matching information acquired by the information acquisition unit 310 on the display unit 306 (step S38). The examiner E utilizes biometric information and matching information displayed on the display unit 306 for an examination.

In the booth terminal 30, steps S32 to S38 described above are repeated every time the visitor V enters the examination booth B.

Next, the details of the process in the information acquisition cart 10, the server 20, and the booth terminal 30 in the information acquisition method according to the present example embodiment will be described, respectively.

First, the details of the process in the information acquisition cart 10 will be described by using Fig. 9 to Fig. 11. Fig. 9 is a flowchart illustrating the process in the information acquisition cart 10 in the information acquisition method according to the present example embodiment. Fig. 10 is a flowchart illustrating acquisition of a face image of the process in the information acquisition cart 10 in the information acquisition method according to the present example embodiment. Fig. 11 is a schematic diagram illustrating an example of an acquisition window for a face image of the information acquisition cart 10 according to the present example embodiment.

First, the personal identification card reading unit 102 reads a personal identification card presented by the visitor V waiting for an examination and acquires a personal identification number (step S102). At this time, when the personal identification card is an IC personal identification card and preregistered biometric information is stored in the IC chip thereof, the personal identification card reading unit 102 acquires the preregistered biometric information together with the personal identification number from the personal identification card.

Next, the acquisition control unit 116 determines whether or not reading of the personal identification card by the personal identification card reading unit 102 is successful (step S104). The acquisition control unit 116 determines that reading of the personal identification card is unsuccessful such as when the personal identification card is stained and thus unable to be read, when the personal identification card is of non-machine reading type and thus unable to be read, or when the personal identification card is altered or forged.

If it is determined that the reading of the personal identification card is unsuccessful (step S104, NO), the display control unit 118 displays on the first display unit 108 a window indicating that reading of the personal identification card failed. This instructs the guide C to guide the visitor V of interest to enter the examination booth B (step S106).

On the other hand, if it is determined that the reading of the personal identification card is successful (step S104, YES), the acquisition control unit 116 determines whether or not biometric information such as fingerprint information, a face image, or the like has not yet been acquired by the biometric information acquisition unit for the visitor V of interest (step S108). The acquisition control unit 116 references person information stored temporarily in the storage unit 122 or person information registered in the person information DB in the server 20 and, when there is no person information acquired for the visitor V of interest within a predetermined time, determines that biometric information has not yet been acquired. On the other hand, when there is person information, the acquisition control unit 116 does not determine that biometric information has not yet been acquired, that is, determines that biometric information has been acquired. For example, it is determined that the biometric information has been acquired when the visitor V whose biometric information has already been acquired by the information acquisition cart 10 again stands in a line of visitors waiting for an examination and is subjected to the process by the information acquisition cart 10.

If it is not determined that biometric information has not yet been acquired (step S108, NO), the display control unit 118 displays, on the first display unit 108, a window indicating that biometric information has been acquired by the biometric information acquisition unit. This instructs the guide C to guide the visitor V of interest to enter the examination booth B (step S106).

On the other hand, if it is determined that biometric information has not yet been acquired (step S108, YES), the display control unit 118 displays, on the first display unit 108, a confirmation window that displays a personal identification number together with a window indicating that biometric information has not yet been acquired by the biometric information acquisition unit. This enables the guide C to confirm a result of reading of the personal identification card (step S110).

In such a way, once the reading of the personal identification card by the personal identification card reading unit 102 is successful and the personal identification number is read, the display control unit 118 displays on the first display unit 108 whether or not biometric information has been acquired within a predetermined period before the reading of the personal identification number.

Next, biometric information such as a fingerprint image, a face image, or the like is acquired on the information acquisition cart 10. For example, a fingerprint image and a face image are acquired as described below, respectively.

First, the fingerprint image acquisition unit 104 acquires a fingerprint image of the visitor V of interest (step S112). For example, the fingerprint image acquisition unit 104 is formed of two fingerprint scanners and reads fingerprints of two index fingers of both hands placed on respective reading faces with balls of these fingers facing the reading faces and acquires respective fingerprint images. For example, the fingerprint scanner may be configured to automatically read a fingerprint to acquire a fingerprint image in response to a ball of a finger being placed on the reading face.

Further, the acquisition control unit 116 evaluates the quality of the fingerprint image acquired by the fingerprint image acquisition unit 104 and calculates the quality value of the fingerprint images that is the index of the quality thereof. The quality value of the fingerprint image is higher for a higher quality of the fingerprint image, for example.

Next, the display control unit 118 displays, on the first display unit 108, the fingerprint images acquired by the fingerprint image acquisition unit 104. Further, the display control unit 118 displays, on the first display unit 108, the quality value of the fingerprint images calculated by the acquisition control unit 116 together with the fingerprint images thereof. Thereby, the guide C confirms the acquired fingerprint image (step S114).

In accordance with the fingerprint images and the quality value thereof displayed on the first display unit 108, the guide C determines whether or not re-acquisition of one or more fingerprint images is necessary (step S116). The guide C is able to determine that re-acquisition is not necessary if the quality value of fingerprint images is greater than or equal to a predetermined reference value, for example.

If it is determined that re-acquisition of one or more fingerprint images is necessary (step S116, YES), the guide C inputs an instruction of re-acquisition of one or more fingerprint images to the information acquisition cart 10. Thereby, the process proceeds to step S112 and performs re-acquisition of one or more fingerprint images.

In contrast, if it is determined that re-acquisition of one or more fingerprint images is not necessary (step S116, NO), the guide C inputs an instruction of proceeding to acquisition of a face image to the information acquisition cart 10.

Once the instruction of proceeding to acquisition of a face image is input, the face image acquisition unit 106 captures an image of the face of the visitor V of interest and acquires a face image (step S118).

In acquisition of a face image, the face image acquisition unit 106 continuously captures an image of the face of the visitor V and continuously acquires a live face image of the visitor V of interest (step S1182). The continuously acquired live face image is displayed on the first display unit 108 by the display control unit 118.

Fig. 11 illustrates one example of a face image acquisition window 1080 displayed on the first display unit 108. The face image acquisition window 1080 has a face image display region 1082 in which a live face image is displayed and a quality display region 1084 that indicates the quality of the live face image displayed in the face image display region 1082 by using colors. Further, the face image acquisition window 1080 has a capturing button 1086 used for instructing image capturing of a face and a cancel button 1088 used for cancelling acquisition of a face image.

The acquisition control unit 116 evaluates the quality of a live face image acquired by the face image acquisition unit 106 and calculates a quality value of the face image that is an index of the quality thereof (step S1184). The quality value of a face image will be higher for a higher quality of the face image thereof, for example. The quality of a face image can be converted into numerals through analysis using an index such as an image size, an aspect ratio, the number of faces, a distance between eyes, a width of eyes, a color profile, a width of a head, a length of a head, brightness, contrast, or the like, for example.

Next, the acquisition control unit 116 determines whether or not the calculated quality value of the face image is greater than or equal to a predetermined reference value (step S1186).

If it is determined that the calculated quality value of the face image is not greater than or equal to the predetermined reference value (step S1186, NO), the process returns to step S1182 to continues the acquisition of a live face image. In this case, the quality display region 1084 of the face image acquisition window 1080 is displayed in yellow, for example, which indicates that the quality value is less than the predetermined reference value, and then the capturing button 1086 is unable to be pressed and no capturing can be performed. The guide C instructs the visitor V whose face image is to be acquired to change the position, the orientation, or the attitude or the like, and thereby the quality value of the live face image can be adjusted to be greater than or equal to the predetermined reference value.

On the other hand, if it is determined that the calculated quality value of the face image is greater than or equal to the predetermined reference value (step S1186, YES), the guide C inputs an instruction of image capturing. Thereby, the face image acquisition unit 106 captures the face of the visitor V (step S1188). In this case, the quality display region 1084 of the face image acquisition window 1080 is displayed in green, for example, which indicates that the quality value is greater than or equal to the predetermined reference value, and the capturing button 1086 is enable to be pressed. This enables the guide C to press the capturing button 1086 to perform image capturing.

The display control unit 118 displays the face image acquired as described above on the first display unit 108. Thereby, the guide C confirms the acquired face image (step S120).

The guide C determines whether or not re-acquisition of a face image is necessary in accordance with the face image displayed on the first display unit 108 (step S122).

If it is determined that re-acquisition of a face image is necessary (step S122, YES), the guide C inputs an instruction of re-acquisition of a face image to the information acquisition cart 10. Thereby, the process proceeds to step S118 and performs re-acquisition of a face image.

On the other hand, if it is determined that re-acquisition of a face image is not necessary (step S122, NO), the guide C ends the acquisition of biometric information performed by the information acquisition cart 10.

Note that the type, the number of pieces, and the order of acquisition of biometric information acquired by the information acquisition cart 10 are not limited to the case described above where a fingerprint image and a face image are acquired, as already described.

Upon the completion of the acquisition of biometric information, the person information management unit 120 transmits the person information including the personal identification number, the preregistered biometric information, and the cart-acquired biometric information acquired as described above to the server 20 via the communication unit 114 (step S124).

In the information acquisition cart 10, the processes illustrated in Fig. 9 and Fig. 10 described above are performed on each of the visitors V waiting for an examination.

Next, the details of the process in the server 20 will be described by using Fig. 12. Fig. 12 is a flowchart illustrating the process in the server 20 in the information acquisition method according to the present example embodiment.

The person information management unit 212 receives person information transmitted from the information acquisition cart 10 (step S202). Subsequently, the person information management unit 212 registers the received person information to the person information DB of the first storage unit 204 (step S204).

Next, the matching processing unit 214 matches the cart-acquired biometric information included in the person information registered in the person information DB against the same type of biometric information registered in the biometric information BL or the biometric information WL of the second storage unit 206 (step S206). Specifically, the matching processing unit 214 matches a fingerprint image acquired by the fingerprint image acquisition unit 104 included in person information registered in the person information DB against a fingerprint image registered in the biometric information BL or the biometric information WL. Further, the matching processing unit 214 matches a face image acquired by the face image acquisition unit 106 included in person information registered in the person information DB against a face image registered in the biometric information BL or the biometric information WL.

Further, the matching processing unit 214 matches the cart-acquired biometric information acquired by the biometric information acquisition unit included in the person information registered in the person information DB against the preregistered biometric information acquired from an IC personal identification card (step S206). Specifically, the matching processing unit 214 matches a fingerprint image acquired by the fingerprint image acquisition unit 104 included in person information registered in the person information DB with a fingerprint image acquired from the IC personal identification card. Further, the matching processing unit 214 matches a face image acquired by the face image acquisition unit 106 included in person information registered in the person information DB with a face image acquired from the IC personal identification card. Thereby, the matching processing unit 214 performs identity verification as to whether or not the visitor V having the IC personal identification card and the applicant of the IC personal identification card are the same person.

Furthermore, the matching processing unit 214 registers matching information indicating the matching result described above to the matching information DB of the third storage unit 208 (step S208). The matching information indicating a result of matching with the biometric information BL indicates whether or not the visitor V in the matched person information is a marked person registered in the biometric information BL. The matching information indicating a result of matching with the biometric information WL indicates whether or not the visitor V in the matched person information is a person registered in the biometric information WL who should be permitted for admission. The matching information indicating a result of matching with the preregistered biometric information such as the fingerprint image, the face image, or the like acquired from an IC personal identification card indicates a result of the identity verification described above as to whether or not the visitor V having the IC personal identification card is the same person as the applicant of the IC personal identification card. The matching processing unit 214 registers matching information to the matching information DB in association with the person information including the matched biometric information.

In the server 20, the process illustrated in Fig. 12 described above is performed every time person information is transmitted from the information acquisition cart 10.

Next, the details of the process in the booth terminal 30 will be described by using Fig. 13. Fig. 13 is a flowchart illustrating the process in the booth terminal 30 in the information acquisition method according to the present example embodiment.

First, the personal identification card reading unit 302 reads a personal identification number from a personal identification card presented by the visitor V entering the examination booth B and acquires a personal identification number (step S302).

Next, the information acquisition unit 310 inquires the server 20 via the communication unit 308 as to whether or not the information acquisition cart 10 was used for the visitor V of the personal identification number in accordance with a personal identification number acquired by the personal identification card reading unit 302 (step S304).

In response to the inquiry from the information acquisition unit 310, the person information management unit 212 of the server 20 references the person information DB of the server 20. Thereby, the person information management unit 212 checks whether or not the person information including the personal identification number acquired within a predetermined period on and before the acquisition of the personal identification number by the personal identification card reading unit 302 is registered in the person information DB. If it is registered, the person information management unit 212 of the server 20 responds to the information acquisition unit 310 to the effect that the information acquisition cart 10 was used.

The predetermined period on and before the acquisition of the personal identification number by the personal identification card reading unit 302 for checking whether or not registration is present in the person information DB can be set to a period that is necessary and sufficient for the visitor V visiting the examination site A to reach the examination booth B, for example. This predetermined period can be suitably set to, for example, 30 minutes, 1 hour, or the like in accordance with the scale of the examination site A, the length of the line of the visitors V in the examination site A, or the like. Accordingly, it is possible to prevent reuse of person information acquired in an earlier period such as on the previous day, one week ago, or the like and the matching information therewith, for example, and improve the accuracy of examination.

If the information acquisition cart 10 was not used (step S306, NO), a normal examination is performed on the visitor V of interest (step S308). In the normal examination, biometric information such as a fingerprint image, a face image, or the like are acquired in the examination booth B for the visitor V of interest.

On the other hand, if the information acquisition cart 10 was used (step S306, YES), the information acquisition unit 310 acquires the person information and the matching information from the server 20 (step S310). That is, the communication unit 210 of the server 20 transmits the person information and the matching information to the booth terminal 30. In accordance with a personal identification number acquired by the personal identification card reading unit 302, the information acquisition unit 310 acquires the latest person information and the matching information thereof including the personal identification number from the server 20 via the communication unit 308. That is, the communication unit 210 of the server 20 transmits the person information and the matching information associated with the personal identification number acquired by the personal identification card reading unit 302 to the booth terminal 30. The person information acquired by the information acquisition unit 310 includes the latest biometric information associated with the personal identification number acquired by the personal identification card reading unit 302. Further, the matching information acquired by the information acquisition unit 310 is associated with the personal identification number acquired by the personal identification card reading unit 302.

Note that the matching information management unit 216 of the server 20 can delete the matching information from the third storage unit 208 after a predetermined retention period has elapsed. For example, the retention period for matching information can be set to a period from the time of acquisition of biometric information, which is acquired by the biometric information acquisition unit and on which matching is performed, to the time when a necessary and sufficient period during which the visitor V reaches the examination booth B has elapsed. This retention period can be suitably set to, for example, 30 minutes, 1 hour, or the like in accordance with the scale of the examination site A, the length of the line of the visitors V in the examination site A, or the like. Accordingly, for example, it is possible to prevent reuse of matching information matched in an earlier period such as on the previous day, one week ago, or the like and improve the accuracy of examination.

Next, the display control unit 312 displays the person information acquired by the information acquisition unit 310 on the display unit 306 in accordance with the operation by the examiner E (step S312). The displayed person information includes biometric information such as a fingerprint image, a face image, or the like. Further, the display control unit 312 displays the matching information on the display unit 306 (step S314).

Next, the examiner E examines the visitor V entering the examination booth B by taking the biometric information and the matching result displayed on the display unit 306 into consideration and determines whether or not to permit admission (step S316).

The biometric information acquired by the information acquisition cart 10 is utilized in such a way in an examination in the examination booth B.

As discussed above, according to the present example embodiment, since biometric information has been acquired by the information acquisition cart 10 for the visitor V to be examined before an examination is performed in the examination booth B, smoother acquisition of biometric information in an examination can be realized.

### [Second Example Embodiment]

An information acquisition system and an information acquisition method according to a second example embodiment of the present invention will be described by using Fig. 14. Fig. 14 is a block diagram illustrating a function configuration of an information acquisition system according to the present example embodiment. Note that the same components as those in the information acquisition system and the information acquisition method according to the first example embodiment described above will be labeled with the same references, and the description thereof will be omitted or simplified.

The basic configuration of the information acquisition system according to the present example embodiment is substantially the same as the configuration of the information acquisition system according to the first example embodiment. The information acquisition system of the present example embodiment is different from the information acquisition system 1 of the first example embodiment in that, in the server 20, the control unit 202 further has a report processing unit 218 that reports a warning in accordance with a result of matching performed by the matching processing unit 214.

As illustrated in Fig. 14, in an information acquisition system 2 according to the present example embodiment, the control unit 202 of the server 20 has a report processing unit 218 that reports a warning in accordance with a result of matching performed by the matching processing unit 214, in addition to the configuration of the first example embodiment.

A surveillance terminal 50 is network-connected to the network 40. The surveillance terminal 50 is able to communicate with the server 20 via the network 40. The surveillance terminal 50 is installed at a place where a surveillant such as a security guard who guards the examination site A is deployed, for example.

The report processing unit 218 reports a warning via the communication unit 210 to the surveillance terminal 50 connected to a network when the result of matching performed by the matching processing unit 214 indicates that a warning needs to be reported. The following cases are illustrated as examples for the case where a matching result indicates that a warning needs to be reported. That is, an example may be a case where the result of matching performed by the matching processing unit 214 indicates that the visitor V is a person under surveillance registered in the biometric information BL, that the visitor V having an IC personal identification card is not the same person as the applicant of the IC personal identification card, or the like. In such a case where a warning needs to be reported, the report processing unit 218 reports a warning to the surveillance terminal 50 via the network 40. Further, the report processing unit 218 notifies the surveillance terminal 50 of the contents of a matching result which has caused the warning together with the warning via the communication unit 210.

The surveillance terminal 50 to which a warning is reported by the report processing unit 218 reports, to a surveillant such as a security guard, a warning together with the contents of a matching result by using a voice, a display indication, or the like. The surveillant such as a security guard to which a warning is reported by the surveillance terminal 50 may take countermeasures against the visitor V who is determined to be a person under surveillance or determined to be not the same person as the applicant of the IC personal identification card in the matching result or may prepare for the countermeasure.

A warning may be reported from the server 20 to the surveillance terminal 50 via the network 40 in accordance with a result of matching performed by the matching processing unit 214 as with the present example embodiment.

### [Third Example Embodiment]

A computer apparatus according to a third example embodiment of the present invention will be described by using Fig. 15. In the present example embodiment, a computer apparatus used for implementing the process of each unit in the information acquisition system according to the first and second example embodiments described above will be described.

Fig. 15 illustrates an example of a computer apparatus used for implementing the process of each unit in the information acquisition system according to the first and second example embodiments described above. A computer apparatus 5000 illustrated in Fig. 15 is not particularly limited but may be of various types or forms. For example, the computer apparatus 5000 may be a laptop computer, a desktop computer, a workstation, a personal digital assistant, a server, a blade server, a mainframe, an embedded system, or the like.

The computer apparatus 5000 has a processor 5002, a memory 5004, and a storage device 5006. Further, the computer apparatus 5000 has a high-speed controller 5008 including a high-speed interface and a low-speed controller 5010 including a low-speed interface. The memory 5004 and a high-speed expansion port 5012 are connected to the high-speed controller 5008. Further, an external input/output device such as a display 5016 or the like is connected to the high-speed controller 5008. On the other hand, a low-speed expansion port 5014 and the storage device 5006 are connected to the low-speed controller 5010.

The processor 5002, the memory 5004, the storage device 5006, the high-speed controller 5008, the low-speed controller 5010, and the high-speed expansion port 5012 are connected to each other through various buses. Further, the processor 5002, the memory 5004, the storage device 5006, the high-speed controller 5008, the low-speed controller 5010, and the high-speed expansion port 5012 may be implemented on a common motherboard or may be implemented in other forms as appropriate.

The processor 5002 is a central processing unit (CPU), for example, and is able to process instructions executed within the computer apparatus 5000. Such instructions include an instruction that is used for displaying graphics information of a graphical user interface (GUI) on an external input/output device such as the display 5016 and stored in the memory 5004 or the storage device 5006.

Further, a plurality of processors, a plurality of buses, or a plurality of processors and a plurality of buses can be used as appropriate together with a plurality of memory devices and multiple types of memory devices. Further, a plurality of computer apparatuses 5000 can be connected to each device that performs a part of the necessary process. For example, a plurality of computer apparatuses 1000 can be connected to each other as a server bank, a group of blade servers, or a multiprocessor system.

The memory 5004 stores therein information within the computer apparatus 5000. For example, the memory 5004 may be a volatile memory unit or a non-volatile memory unit. The memory 5004 may be another computer readable medium, such as a magnetic disk, an optical disk, or the like, for example.

The storage device 5006 can configure mass storage used for the computer apparatus 5000. The storage device 5006 may be a computer readable storage medium or include such a computer readable storage medium. A computer readable medium may be, for example, a floppy (registered trademark) disk device, a hard disk device, an optical disk device, a tape device, a solid state memory device such as a flash memory, a disk array, or the like. The storage device 5006 may include a storage area network or a device with another configuration. A computer program product may be tangibly embodied in an information carrier. The computer program product can also store an instruction that executes one or a plurality of processes as described above when executed. The information carrier may be a memory device such as the memory 5004, the storage device 5006, or the memory on the processor 5002 or may be a computer readable medium or a machine readable medium such as a carrier signal.

The high-speed controller 5008 manages processes in which the bandwidth for the computer apparatus 5000 is intensively used. On the other hand, the low-speed controller 5010 manages processes in which the bandwidth is less intensively used. However, such allocation of the functions is a mere example, and allocation is not limited thereto. Further, a part or a whole of the high-speed controller 5008 may be incorporated in the processor 5002.

The high-speed controller 5008 is connected to the high-speed expansion port 5012 that can accept the memory 5004 and various expansion cards. Further, the high-speed controller 5008 is connected to the display 5016 via a graphics processor or an accelerator, for example.

Further, the low-speed controller 5010 is connected to the storage device 5006 and the low-speed expansion port 5014. The low-speed expansion port 5014 can include, for example, a communication port of various standards such as Universal Serial Bus (USB), Bluetooth (registered trademark), wired or wireless Ethernet (registered trademark), or the like. One or plurality of input/output devices such as a keyboard, a pointing device, a scanner, or the like can be connected to the low-speed expansion port 5014. Further, one or plurality of network devices such as a switch, a router, or the like can be connected to the low-speed expansion port 5014 via a network adapter, for example.

The computer apparatus 5000 can be implemented in many different forms. For example, the computer apparatus 5000 can be implemented in a form of a typical server or a plurality of servers in a form of a group of such servers. Further, the computer apparatus 5000 can be implemented as a part of the rack server system. Furthermore, the computer apparatus 5000 can be implemented in a form of a personal computer such as a laptop computer, a desktop computer, or the like.

The computer apparatus 5000 described above can function as a part of the information acquisition cart 10 in the example embodiments described above. In this case, the processor 5002 of the computer apparatus 5000 can function as the control unit 112 by executing a program that implements the function of the control unit 112 of the information acquisition cart 10. That is, the processor 5002 executes programs that implement the functions of respective units of the acquisition control unit 116, the display control unit 118, and the person information management unit 120. Thereby, the processor 5002 can function as each unit of the acquisition control unit 116, the display control unit 118, and the person information management unit 120. Further, the storage device 5006 of the computer apparatus 5000 can function as the storage unit 122 of the information acquisition cart 10.

Further, the computer apparatus 5000 can function as the server 20 in the example embodiments described above. In this case, the processor 5002 of the computer apparatus 5000 can function as the control unit 202 by executing a program that implements the function of the control unit 202 of the server 20. That is, the processor 5002 executes programs that implement the functions of respective units of the person information management unit 212, the matching processing unit 214, a matching information management unit 216, and the report processing unit 218. Thereby, the processor 5002 can function as each unit of the person information management unit 212, the matching processing unit 214, a matching information management unit 216, and the report processing unit 218. Further, the storage device 5006 of the computer apparatus 5000 can function as the first storage unit 204, the second storage unit 206, and the third storage unit 208 of the server 20.

Further, the computer apparatus 5000 can function as a part of the booth terminal 30 in the example embodiments described above. In this case, the processor 5002 of the computer apparatus 5000 can function as the control unit 304 by executing a program that implements the function of the control unit 304 of the booth terminal 30. That is, the processor 5002 executes programs that implement the functions of respective units of the information acquisition unit 310 and the display control unit 312. Thereby, the processor 5002 can function as each unit of the information acquisition unit 310 and the display control unit 312.

Note that a part or a whole of the program executed by the processor 5002 of the computer apparatus 5000 can be provided by a computer readable storage medium storing the above, such as a digital versatile disc-read only memory (DVD-ROM), a compact disc-read only memory (CD-ROM), a flash memory such as a USB memory or the like.

### [Other Example Embodiments]

The information acquisition system illustrated in each of the example embodiments described above can be configured as illustrated in Fig. 16 according to another example embodiment. Fig. 16 is a block diagram illustrating a function configuration of an information acquisition system according to another example embodiment.

As illustrated in Fig. 16, an information acquisition system 6001 according to another example embodiment includes an information acquisition apparatus 6010, a server 6020, and an information terminal 6030. The information acquisition apparatus 6010 can communicate with the server 6020 via a network 6040, for example. The information terminal 6030 can communicate with the server 6020 via the network 6040, for example.

The information acquisition apparatus 6010 is arranged in a section in which a first subject stands by. The information acquisition apparatus 6010 has a first reading unit 6012 that reads and acquires identification information from a medium carried by the first subject and a biometric information acquisition unit 6014 that acquires biometric information on the first subject from the first subject. Further, the information acquisition apparatus 6010 has a first information management unit 6016 that transmits, to the server 6020, person information including identification information and biometric information associated with each other.

The server 6020 has a second information management unit 6022 that registers, to a database, person information transmitted from the information acquisition apparatus 6010.

Further, the server 6020 may have a communication unit 6024. The communication unit 6024 receives, from the information terminal 6030, an inquiry as to whether or not the information acquisition apparatus 6010 was used for a second subject based on identification information acquired from a medium possessed by the second subject who passed through the first area. Further, if the information acquisition apparatus 6010 was used, the communication unit 6024 transmits, to the information terminal 6030, the biometric information associated with the identification information acquired from the medium possessed by the second subject.

The information terminal 6030 is arranged in a second section that is different from the first section. The information terminal 6030 has a second reading unit 6032 that reads and acquires identification information from a medium carried by a second subject who has passed through the first section. Further, the information terminal 6030 has an information acquisition unit 6034 that acquires, from the server 6020, biometric information associated with identification information acquired by the second reading unit 6032.

### [Modified Example Embodiments]

The present invention is not limited to the example embodiments described above, and various modifications are possible.

For example, while the case where a fingerprint image and a face image are acquired by the information acquisition cart 10 as biometric information has been described as an example in the above example embodiments, the example embodiment is not limited thereto. The information acquisition cart 10 may be configured to acquire information on an iris, a retina, a palm print, a blood vessel, a voiceprint, or the like other than information on a fingerprint and a face as biometric information representing a body feature or an action feature of an individual. Further, the type of biometric information acquired by the information acquisition cart 10 and the number of pieces thereof are not particularly limited. The information acquisition cart 10 may be to acquire a single type of biometric information or may be to acquire any combination of multiple types of biometric information.

Further, while the case where the information acquisition cart 10 in a form of a cart is used as an information acquisition apparatus having a function of acquiring biometric information has been described as an example in the above example embodiments, the example embodiment is not limited thereto. Without being limited to those in a cart form as with the information acquisition cart 10, various forms of information acquisition apparatus can be used.

Further, while the case where the guide C operates the information acquisition cart 10 has been described as an example in the above example embodiments, the example embodiment is not limited thereto. For example, the information acquisition cart 10 may be configured to be operated by the visitor V itself in accordance with an instruction of a guide window, a guide voice, or the like and thereby acquire a personal identification number and biometric information.

Further, while the case where biometric information is acquired and utilized in the examination site A has been described as an example in the above example embodiments, the example embodiment is not limited thereto. The information acquisition system according to the present invention is applicable to any cases where biometric information is acquired and utilized. The information acquisition system according to the present invention can be widely applied to cases where biometric information on a visitor is acquired and the acquired biometric information is used in determination as to whether or not to permit admission at an entrance such as an entrance gate of a facility, a site, or the like, for example.

The whole or part of the example embodiments disclosed above can be described as, but not limited to, the following supplementary notes.

### (Supplementary note 1)

An information acquisition system comprising: a server; an information acquisition apparatus capable of communicating with the server; and an information terminal capable of communicating with the server,
wherein the information acquisition apparatus is arranged in a first section where a first subject stands by, and the information acquisition apparatus has
a first reading unit that reads and acquires identification information from a medium carried by the first subject,
a biometric information acquisition unit that acquires biometric information on the first subject from the first subject, and
a first information management unit that transmits, to the server, person information including the identification information and the biometric information associated with each other,
wherein the server has
a second information management unit that registers, to a database, the person information transmitted from the information acquisition apparatus, and
wherein the information terminal is arranged in a second section different from the first section and the information terminal has
a second reading unit that reads and acquires identification information from a medium carried by the first subject that has passed through the first section, and
an information acquisition unit that acquires, from the server, the biometric information associated with the identification information acquired by the second reading unit.

### (Supplementary note 2)

The information acquisition system according to supplementary note 1, wherein the information acquisition unit inquires the server as to whether or not the information acquisition apparatus was used for the first subject whose identification information has been read by the second reading unit and, when the information acquisition apparatus was used, acquires, from the server, the biometric information associated with the identification information acquired by the second reading unit.

### (Supplementary note 3)

The information acquisition system according to supplementary note 1 or 2, wherein the server has a matching processing unit that matches the biometric information included in the person information transmitted from the information acquisition apparatus against biometric information on a particular person registered in a list,
wherein the information acquisition unit acquires, from the server, matching information indicating a result of matching performed by the matching processing unit.

### (Supplementary note 4)

The information acquisition system according to supplementary note 3, wherein the server has a report processing unit that reports a warning in accordance with a result of matching performed by the matching processing unit.

### (Supplementary note 5)

The information acquisition system according to any one of supplementary notes 1 to 4, wherein the biometric information acquisition unit acquires a biometric image of the first subject as the biometric information.

### (Supplementary note 6)

The information acquisition system according to supplementary note 5,
wherein the information acquisition apparatus has a quality evaluation unit that evaluates a quality of the biometric image and calculates a quality value, and
wherein the biometric information acquisition unit acquires the biometric image having the quality value greater than or equal to a reference value.

### (Supplementary note 7)

The information acquisition system according to supplementary note 5 or 6, wherein the biometric image is at least one of a fingerprint image and a face image of the first subject.

### (Supplementary note 8)

The information acquisition system according to any one of supplementary notes 1 to 7, wherein the information acquisition apparatus has transportability.

### (Supplementary note 9)

The information acquisition system according to any one of supplementary notes 1 to 8, wherein the information acquisition apparatus is driven by a battery.

### (Supplementary note 10)

The information acquisition system according to any one of supplementary notes 1 to 9, wherein the information acquisition apparatus is wirelessly communicable with the server.

### (Supplementary note 11)

An information acquisition apparatus included in an information acquisition system including a server and an information terminal capable of communicating with the server, arranged in a first area in which a first subject is waiting, and capable of communicating with the server, the information acquisition apparatus comprising:
a first reading unit that reads and acquires identification information from a medium possessed by the first subject;
a biometric information acquisition unit that acquires biometric information on the first subject from the first subject; and
a first information management unit that transmits person information including the identification information and the biometric information associated with each other to the server capable of communicating with the information terminal that is arranged in a second area different from the first area and reads and acquires identification information from a medium possessed by a second subject who passed through the first area.

### (Supplementary note 12)

The information acquisition apparatus according to supplementary note 11 further comprising a display control unit that, when the identification information is read by the first reading unit, displays on a display unit whether or not the biometric information was acquired within a predetermined period.

### (Supplementary note 13)

The information acquisition apparatus according to supplementary note 11 further comprising a quality evaluation unit that evaluates quality of a biometric image acquired as the biometric information and calculates a quality value,
wherein the biometric information acquisition unit acquires the biometric image having the quality value which is higher than or equal to a reference value.

### (Supplementary note 14)

The information acquisition apparatus according to supplementary note 13 further comprising a display control unit that displays the biometric image and the quality value on a display unit.

### (Supplementary note 15)

The information acquisition apparatus according to any one of supplementary notes 11 to 14 further comprising an acquisition control unit that determines the biometric information to be acquired by the biometric information acquisition unit in accordance with the number of times a facility where the biometric information is used is used by the first subject or in accordance with whether or not preregistration is present.

### (Supplementary note 16)

The information acquisition apparatus according to supplementary note 15, wherein the acquisition control unit reduces the number of pieces of the biometric information to be acquired by the biometric information acquisition unit to be smaller when the number of times of use is larger or when the preregistration is present than when the preregistration is absent.

### (Supplementary note 17)

A server included in an information acquisition system including an information acquisition apparatus arranged in a first area and an information terminal arranged in a second area that is different from the first area and capable of communicate with the information acquisition apparatus and the information terminal, the server comprising:
a second information management unit that registers identification information acquired from a medium possessed by a first subject waiting in the first area and person information including biometric information acquired from the first subject, which are transmitted from the information acquisition apparatus, in a database; and
a communication unit that receives an inquiry from the information terminal as to whether or not the information acquisition apparatus is used for a second subject based on identification information acquired from a medium possessed by the second subject who passed through the first area and, if the information acquisition apparatus is used, transmits, to the information terminal, the biometric information associated with the identification information acquired from the medium possessed by the second subject.

### (Supplementary note 18)

The server according to supplementary note 17 further comprising a matching processing unit that matches the biometric information included in the person information transmitted from the information acquisition apparatus with biometric information on a particular person registered in a list,
wherein the communication unit transmits, to the information terminal, matching information indicating a matching result provided by the matching processing unit.

### (Supplementary note 19)

The server according to supplementary note 18,
wherein the person information includes preregistered biometric information acquired from the medium possessed by the first subject, and
wherein the matching processing unit matches the biometric information acquired from the first subject with the preregistered biometric information.

### (Supplementary note 20)

The server according to supplementary note 18 or 19,
wherein in response to receiving an inquiry as to whether or not the information acquisition apparatus is used for the second subject based on the identification information acquired from the medium possessed by the second subject, the second information management unit determines whether or not the person information that is associated with the identification information acquired from the medium possessed by the second subject and that was acquired within a predetermined period from acquisition of the identification information acquired from the medium possessed by the second subject is registered in the database, and
wherein if the person information acquired within the predetermined period is registered, the communication unit transmits the person information and the matching information to the information terminal.

### (Supplementary note 21)

An information terminal included in an information acquisition system including a server and an information acquisition apparatus arranged in a first area and capable of communicating with the server, arranged in a second area that is different from the first area, and capable of communicating with the server, the information terminal comprising:
a second reading unit that reads and acquires identification information from a medium possessed by a second subject who passed through the first area; and
an information acquisition unit that acquires, from the server, biometric information on a first subject associated with the identification information acquired by the second reading unit and acquired from the first subject waiting in the first area.

### (Supplementary note 22)

The information terminal according to supplementary note 21, wherein the information terminal inquires of the server whether or not the information acquisition apparatus is used for the second subject from which the identification information is read by the second reading unit and, if the information acquisition apparatus is used, acquires, from the server, the biometric information associated with the identification information acquired by the second reading unit.

### (Supplementary note 23)

An information acquisition method using an information acquisition system including a server, an information acquisition apparatus capable of communicating with the server, and an information terminal capable of communicating with the server, the method comprising:
at the information acquisition apparatus arranged in a first section where a first subject stands by,
   reading and acquiring identification information from a medium carried by the first subject;
   acquiring biometric information on the first subject from the first subject; and
   transmitting, to the server, person information including the identification information and the biometric information associated with each other;
at the server,
   registering, to a database, the person information transmitted from the information acquisition apparatus; and
at the information terminal arranged in a second section different from the first section,
   reading and acquiring identification information from a medium carried by the first subject that has passed through the first section; and
   acquiring, from the server, the biometric information associated with the acquired identification information.

As described above, while the present invention has been described with reference to the example embodiments, the present invention is not limited to these example embodiments described above. Various modifications that can be appreciated by those skilled in the art can be made to the configuration and details of the present invention within the scope of the present invention.

This application is based upon and claims the benefit of priority from Japanese Patent Application No. 2018-053935, filed on March 22, 2018, the disclosure of which is incorporated herein in its entirety by reference.

### [Reference Signs List]

- 1, 2:: information acquisition system
- 10:: information acquisition cart
- 20:: server
- 30:: booth terminal

## Claims

1. An information acquisition system comprising: a server; an information acquisition apparatus capable of communicating with the server; and an information terminal capable of communicating with the server,
wherein the information acquisition apparatus is arranged in a first section where a first subject stands by, and the information acquisition apparatus has
a first reading unit that reads and acquires identification information from a medium carried by the first subject,
a biometric information acquisition unit that acquires biometric information on the first subject from the first subject, and
a first information management unit that transmits, to the server, person information including the identification information and the biometric information associated with each other,
wherein the server has
a second information management unit that registers, to a database, the person information transmitted from the information acquisition apparatus, and
wherein the information terminal is arranged in a second section different from the first section and the information terminal has
a second reading unit that reads and acquires identification information from a medium carried by the first subject that has passed through the first section, and
an information acquisition unit that acquires, from the server, the biometric information associated with the identification information acquired by the second reading unit.

2. The information acquisition system according to claim 1, wherein the information acquisition unit inquires the server as to whether or not the information acquisition apparatus was used for the first subject whose identification information has been read by the second reading unit and, when the information acquisition apparatus was used, acquires, from the server, the biometric information associated with the identification information acquired by the second reading unit.

3. The information acquisition system according to claim 1 or 2, wherein the server has a matching processing unit that matches the biometric information included in the person information transmitted from the information acquisition apparatus against biometric information on a particular person registered in a list,
wherein the information acquisition unit acquires, from the server, matching information indicating a result of matching performed by the matching processing unit.

4. The information acquisition system according to claim 3, wherein the server has a report processing unit that reports a warning in accordance with a result of matching performed by the matching processing unit.

5. The information acquisition system according to any one of claims 1 to 4, wherein the biometric information acquisition unit acquires a biometric image of the first subject as the biometric information.

6. The information acquisition system according to claim 5,
wherein the information acquisition apparatus has a quality evaluation unit that evaluates a quality of the biometric image and calculates a quality value, and
wherein the biometric information acquisition unit acquires the biometric image having the quality value greater than or equal to a reference value.

7. The information acquisition system according to claim 5 or 6, wherein the biometric image is at least one of a fingerprint image and a face image of the first subject.

8. The information acquisition system according to any one of claims 1 to 7, wherein the information acquisition apparatus has transportability.

9. The information acquisition system according to any one of claims 1 to 8, wherein the information acquisition apparatus is driven by a battery.

10. The information acquisition system according to any one of claims 1 to 9, wherein the information acquisition apparatus is wirelessly communicable with the server.

11. An information acquisition apparatus included in an information acquisition system including a server and an information terminal capable of communicating with the server, arranged in a first area in which a first subject is waiting, and capable of communicating with the server, the information acquisition apparatus comprising:
a first reading unit that reads and acquires identification information from a medium possessed by the first subject;
a biometric information acquisition unit that acquires biometric information on the first subject from the first subject; and
a first information management unit that transmits person information including the identification information and the biometric information associated with each other to the server capable of communicating with the information terminal that is arranged in a second area different from the first area and reads and acquires identification information from a medium possessed by a second subject who passed through the first area.

12. The information acquisition apparatus according to claim 11 further comprising a display control unit that, when the identification information is read by the first reading unit, displays on a display unit whether or not the biometric information was acquired within a predetermined period.

13. The information acquisition apparatus according to claim 11 further comprising a quality evaluation unit that evaluates quality of a biometric image acquired as the biometric information and calculates a quality value,
wherein the biometric information acquisition unit acquires the biometric image having the quality value which is higher than or equal to a reference value.

14. The information acquisition apparatus according to claim 13 further comprising a display control unit that displays the biometric image and the quality value on a display unit.

15. The information acquisition apparatus according to any one of claims 11 to 14 further comprising an acquisition control unit that determines the biometric information to be acquired by the biometric information acquisition unit in accordance with the number of times a facility where the biometric information is used is used by the first subject or in accordance with whether or not preregistration is present.

16. The information acquisition apparatus according to claim 15, wherein the acquisition control unit reduces the number of pieces of the biometric information to be acquired by the biometric information acquisition unit to be smaller when the number of times of use is larger or when the preregistration is present than when the preregistration is absent.

17. A server included in an information acquisition system including an information acquisition apparatus arranged in a first area and an information terminal arranged in a second area that is different from the first area and capable of communicate with the information acquisition apparatus and the information terminal, the server comprising:
a second information management unit that registers identification information acquired from a medium possessed by a first subject waiting in the first area and person information including biometric information acquired from the first subject, which are transmitted from the information acquisition apparatus, in a database; and
a communication unit that receives an inquiry from the information terminal as to whether or not the information acquisition apparatus is used for a second subject based on identification information acquired from a medium possessed by the second subject who passed through the first area and, if the information acquisition apparatus is used, transmits, to the information terminal, the biometric information associated with the identification information acquired from the medium possessed by the second subject.

18. The server according to claim 17 further comprising a matching processing unit that matches the biometric information included in the person information transmitted from the information acquisition apparatus with biometric information on a particular person registered in a list,
wherein the communication unit transmits, to the information terminal, matching information indicating a matching result provided by the matching processing unit.

19. The server according to claim 18,
wherein the person information includes preregistered biometric information acquired from the medium possessed by the first subject, and
wherein the matching processing unit matches the biometric information acquired from the first subject with the preregistered biometric information.

20. The server according to claim 18 or 19,
wherein in response to receiving an inquiry as to whether or not the information acquisition apparatus is used for the second subject based on the identification information acquired from the medium possessed by the second subject, the second information management unit determines whether or not the person information that is associated with the identification information acquired from the medium possessed by the second subject and that was acquired within a predetermined period from acquisition of the identification information acquired from the medium possessed by the second subject is registered in the database, and
wherein if the person information acquired within the predetermined period is registered, the communication unit transmits the person information and the matching information to the information terminal.

21. An information terminal included in an information acquisition system including a server and an information acquisition apparatus arranged in a first area and capable of communicating with the server, arranged in a second area that is different from the first area, and capable of communicating with the server, the information terminal comprising:
a second reading unit that reads and acquires identification information from a medium possessed by a second subject who passed through the first area; and
an information acquisition unit that acquires, from the server, biometric information on a first subject associated with the identification information acquired by the second reading unit and acquired from the first subject waiting in the first area.

22. The information terminal according to claim 21, wherein the information terminal inquires of the server whether or not the information acquisition apparatus is used for the second subject from which the identification information is read by the second reading unit and, if the information acquisition apparatus is used, acquires, from the server, the biometric information associated with the identification information acquired by the second reading unit.

23. An information acquisition method using an information acquisition system including a server, an information acquisition apparatus capable of communicating with the server, and an information terminal capable of communicating with the server, the method comprising:
at the information acquisition apparatus arranged in a first section where a first subject stands by,
reading and acquiring identification information from a medium carried by the first subject;
acquiring biometric information on the first subject from the first subject; and
transmitting, to the server, person information including the identification information and the biometric information associated with each other;
at the server,
registering, to a database, the person information transmitted from the information acquisition apparatus; and
at the information terminal arranged in a second section different from the first section,
reading and acquiring identification information from a medium carried by the first subject that has passed through the first section; and
acquiring, from the server, the biometric information associated with the acquired identification information.
